(19) Europäisches Patentamt / European Patent Office / Office européen des brevets

(11) **EP 2 214 338 B1**

(12) **EUROPEAN PATENT SPECIFICATION**

(45) Date of publication and mention
of the grant of the patent:
**15.01.2014 Bulletin 2014/03**

(51) Int Cl.:
*H04L 1/00* (2006.01)　　　*H04L 1/20* (2006.01)
*H04L 1/06* (2006.01)

(21) Application number: **09001345.9**

(22) Date of filing: **30.01.2009**

(54) **Apparatus and method for determining a channel quality parameter**

Vorrichtung und Verfahren zur Bestimmung eines Kanalqualitätsparameters

Appareil et procédé pour déterminer un paramètre de qualité de canal

(84) Designated Contracting States:
**DE GB**

(43) Date of publication of application:
**04.08.2010 Bulletin 2010/31**

(73) Proprietor: **NTT DOCOMO, INC.**
**Tokyo 100-6150 (JP)**

(72) Inventors:
• **Dietl, Guido**
**80687 München (DE)**
• **Labreche, Olivier**
**80687 München (DE)**

(74) Representative: **Zimmermann, Tankred Klaus et al**
**Schoppe, Zimmermann, Stöckeler & Zinkler**
**Patentanwälte**
**Postfach 246**
**82043 Pullach bei München (DE)**

(56) References cited:
**EP-A- 1 508 992**　　　**WO-A-01/45300**
**WO-A-02/093782**　　**US-A1- 2008 227 495**

• BAUCH G ET AL: "MIMO technologies for the wireless future" PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-6, XP031371835 ISBN: 978-1-4244-2643-0
• PHILIPS: "Comparison between MU-MIMO codebook-based channel reporting techniques for LTE downlink" 3GPP DRAFT; R1-062483, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103007

**Description**

Embodiments according to the invention relate to an apparatus and a method for determining a channel quality parameter for a Multiple-Input Multiple-Output (MIMO) communication system with a number of data streams being simultaneously provided to terminals by a base station.

Scheduling in the downlink of a multiuser Multiple-Input Multiple-Output (MIMO) communication system requires information about the channel qualities, i.e., the Signal-to-Interference-and-Noise Ratios (SINRs) at the different terminals, for example. One problem for determining the SINR value at each terminal is that the finally chosen precoder is not known when it is computed. State-of-the-art methods suggest different approximations of the SINR value in this case.

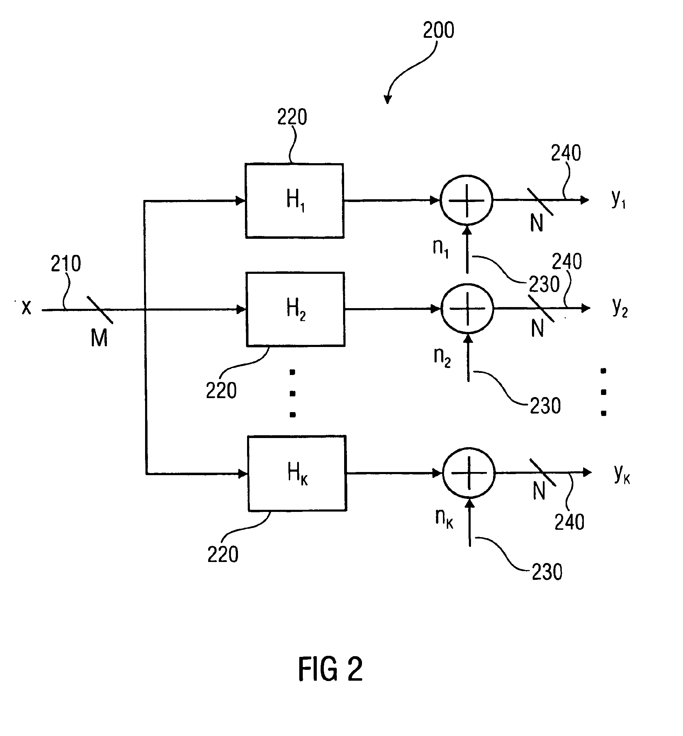

In the downlink 200 (channel) of a multiuser MIMO system as depicted in Fig. 2, the scheduled and precoded symbols, summarized in the vector $\mathbf{x} \sim \mathbf{N}_C(\mathbf{0}_M, \mathbf{C}_x)$ 210, are transmitted via the $M$ antennas of the base station to the $K$ mobile stations, each equipped with $N$ received antennas. Note that the transmit power at the base station is $P_{Tx}$ = tr $(\mathbf{C}_x)$. With the $k$th user's channel matrix $\mathbf{H}_k \in \mathbf{C}^{NxM}$, $k \in \{1,...,K\}$ 220, and the noise vector $\mathbf{n}_k \sim \mathbf{N}_C(\mathbf{0}_N, \mathbf{I}_N)$ 230 with independent and normal distributed elements of variance one, the perturbed receive vector 240 of the $k$th user can be written as

$$ \boldsymbol{y}_k = \boldsymbol{H}_k \boldsymbol{x} + \boldsymbol{n}_k \in \mathbb{C}^N. $$

$$(1)$$

Linear precoder and receivers are used and it is assumed that the scheduler has already selected the users for transmission which are summarized in the set $\mathbf{K} \subseteq \{1,...,K\}$. In particular, $d_k$ data symbols of variance $P_{Tx}/D$, summarized in the following in the symbol vector $\mathbf{s}_k \in \mathbf{C}^{d_k}$, have been assigned to user $k$. Therefore, the total number of transmitted symbols is $D = \sum_{k \in \mathbf{K}} d_k$.

Then, each symbol vector is precoded using the precoders $\mathbf{P}_k \in \mathbf{C}^{Mxd_k}$, and summed up to get the transmit vector

$$ \boldsymbol{x} = \sum_{k \in \mathbb{K}} \boldsymbol{P}_k \boldsymbol{s}_k = \boldsymbol{Ps}. $$

$$(2)$$

Here, $\mathbf{P} \in \mathbf{C}^{MxD}$ is a matrix where the precoders $\mathbf{P}_k, k \in \mathbf{K}$, are stacked in a row with ascending $k$, in the following denoted as $\mathbf{P} = rstack(\mathbf{P}_k)_{k \in \mathbf{K}}$, and $\mathbf{s} \in \mathbf{C}^D$ is a vector where the symbol vectors $\mathbf{s}_k, k \in \mathbf{K}$, are stacked in a column with ascending $k$, in the following denoted as $\mathbf{s} = cstack(\mathbf{s}_k)_{k \in \mathbf{K}}$.

Next, the receivers at the mobile stations is described. It is assumed that each user is applying a linear filter $\mathbf{W}_k \in \mathbf{C}^{d_k xN}$ to the receive vector $\mathbf{y}_k$ to get the estimate

$$ \hat{\boldsymbol{s}}_k = \boldsymbol{W}_k \boldsymbol{y}_k \in \mathbb{C}^{d_k}, $$

$$(3)$$

of the $k$th user's symbol vector $\mathbf{s}_k$. In particular, the linear Minimum Mean Square Error (MMSE) filter obtained via the minimization of the mean-square error is considered between $\mathbf{s}_k$ and $\hat{\mathbf{s}}_k = \mathbf{W}_k \mathbf{y}_k$, whose solution computes as (e.g. " S. Verdú. *Multiuser Detection.* Cambridge University Press, 1998.")

$$ \boldsymbol{W}_k = \boldsymbol{P}_k^{\mathrm{H}} \boldsymbol{H}_k^{\mathrm{H}} \left( \boldsymbol{H}_k \boldsymbol{P} \boldsymbol{P}^{\mathrm{H}} \boldsymbol{H}_k^{\mathrm{H}} + \frac{D}{P_{\mathrm{Tx}}} \boldsymbol{I}_N \right)^{-1}. $$

$$(4)$$

Note that it is assumed that each receiver has access to the perfect Channel State Information (CSI) of its own channel $\mathbf{H}_k$. However, it has no CSI about the channels of the other users due to the non-cooperative nature of the multiuser MIMO downlink channel.

A typical measure for the downlink transmission performance of a multiuser MIMO system is the sum rate over all users. In the following, it is assumed that maximal one data stream is assigned to each user, i.e., $d_k \in \{0,1\}$. Consequently, the precoding and receiver matrix of each scheduled user $k \in \mathbf{K}$, *viz.*, $\mathbf{P}_k \in \mathbf{C}^{M \times d_k}$ and $\mathbf{W}_k \in \mathbf{C}^{d_k \times N}$, shrink to a vector, in the following denoted as $\mathbf{p}_k \in \mathbf{C}^M$ *and* $\mathbf{w}_k^T \in \mathbf{C}^{1 \times N}$ , respectively. Besides, the number of scheduled users is equal to the number of scheduled data streams, i.e., $|\mathbf{K}| = D$.

With this assumption, the Signal-to-Interference-and-Noise Ratio (SINR) at the output of the receive filter $\mathbf{w}_k^T$ of the kth user can be written as

$$\gamma_k = \frac{\left| w_k^T H_k p_k \right|^2}{\|w_k\|_2^2 \frac{D}{P_{Tx}} + \sum_{\substack{i \in \mathbb{K} \\ i \neq k}} \left| w_k^T H_k p_i \right|^2}.$$

$$(5)$$

and the sum rate computes as

$$R_{sum} = \sum_{k \in \mathbb{K}} \log_2 (1 + \gamma_k).$$

$$(6)$$

Remember that the variance of each user's symbol is set to $P_{Tx}/D$.

For example, in order to compute the precoder and schedule the users for transmission, the base station requires information about the channel matrices $\mathbf{H}_k$ for all $k \in \{1,...,K\}$. This so-called Channel State Information (CSI) is fed back from the terminals to the base station. Precisely speaking, each user quantizes its channel based on a channel codebook and feeds back the corresponding codebook index together with an SINR value which includes a rough estimate of the interference caused by the quantization error (see e.g. "M. Trivellato, F. Boccardi, and F. Tosato. User selection schemes for MIMO broadcast channels with limited feedback. Vehicular Technology Conference, 2007. VTC2007-Spring. IEEE 65th, pages 2089-2093, April 2007", "Philips. Comparison between MU-MIMO codebook-based channel reporting techniques for LTE downlink, Oct. 2006. 3GPP TSG RAN WG1 #46 R1-062483", "Philips. Comparison of MU-MIMO feedback schemes with multiple UE receive antennas, Jan. 2006. 3GPP TSG RAN WG1 #47bis R1-070346" and "N. Jindal. A feedback reduction technique for MIMO broadcast channels. Information Theory, 2006 IEEE International Symposium on, pages 2699-2703, July 2006.") The base station is then computing a precoder, e.g. of type Zero-Forcing (ZF), based on the quantized CSI and allocates resources using the available SINR information. Again, since low feedback schemes are of interest, the maximum number of transmitted data symbols per user may be restricted to one, i.e., $d_k = 1$ for all $k \in \mathbf{K}$.

For a channel vector quantization (CVQ) and feedback of channel quality indicator (CQI) it may be assumed for the first that the precoder $\mathbf{P}$ is known at the mobile receivers such that the MMSE filters $\mathbf{W}_k = \mathbf{w}_k^T \in \mathbf{C}^{1 \times N}$ can be computed according to Eq. (4). In order to compute the feedback information, each user k quantizes the composite channel vector $\mathbf{g}_k^T = \mathbf{w}_k^T \mathbf{H}_k \in \mathbf{C}^{1 \times M}$ , being a combination of the linear MMSE filter and the physical channel matrix, by applying Channel Vector Quantization (CVQ). With the channel codebook $C = \{u_1,...,u_{2_B}\}$ where $B$ denotes the number of necessary bits for indexing the $2^B$ normalized codebook vectors $\mathbf{u}_q$, $q \in \{1,...,2^B\}$. The quantized composite channel vector $\hat{\mathbf{g}}_k \in \mathbf{C}^M$ is the codebook entry which has the minimum Euclidean distance to the normalized composite channel vector, i.e., for $k \in \mathbf{K}$ :

$$\hat{g}_k = u_\ell, \quad \ell = \operatorname*{argmax}_{q \in \{1,\dots,2^B\}} |u_q^{\mathrm{H}} g_k| / \|g_k\|_2.$$

$$(7)$$

Here, $\ell$ denotes the codebook index which is fed back to the base station using $B$ bits. Note that the codebook index provides only the direction of the channel vector whereas the magnitude is included in the SINR value which is also part of the feedback information. Different approximations of this SINR value are known (e.g. "M. Trivellato, F. Boccardi, and F. Tosato. User selection schemes for MIMO broadcast channels with limited feedback. Vehicular Technology Conference, 2007. VTC2007-Spring. IEEE 65th, pages 2089-2093, April 2007" or "Philips. Comparison between MU-MIMO codebook-based channel reporting techniques for LTE downlink, Oct. 2006. 3GPP TSG RAN WG1 #46 R1-062483"), defining different types of Channel Quality Indicators (CQIs).

First, one can simply ignore multiuser interference caused by imperfect CSI due to quantization. The resulting CQI is then an indication of the Signal-to-Noise Ratio (SNR) defined as

$$\mathrm{CQI}_k^{\mathrm{T1}} \triangleq \frac{P_{\mathrm{Tx}}}{M} \|g_k\|^2 \cos^2 \theta_k$$

$$(8)$$

where $\cos \theta_k = |\mathbf{g}_k^H \hat{\mathbf{g}}_k| / \|\mathbf{g}_k\|_2$, and $\theta_k \in [0, \pi]$ denotes the angle between the normalized composite channel vector and the quantized version thereof.

Another approximation takes the multiuser interference due to the quantization error into account:

$$\mathrm{CQI}_k^{\mathrm{T2}} \triangleq \frac{\frac{P_{\mathrm{Tx}}}{M} \|g_k\|^2 \cos^2 \theta_k}{1 + \frac{P_{\mathrm{Tx}}}{M} \|g_k\|^2 \sin^2 \theta_k}$$

$$(9)$$

Note that all given CQI values are a scaled version of the SINR where the scaling factor depends on the final number of scheduled data streams (users, terminals) which is not known to the terminals at this time.

It remains to explain how the users can approximate the composite channel vector $g_k$ without knowing the precoder $P$ at the base station. For example, the ideas of "N. Jindal. A feedback reduction technique for MIMO broadcast channels. In formation Theory, 2006 IEEE International Symposium on, pages 2699-2703, July 2006" may be followed, where the composite is chosen as a linear combination of the rows of $\mathbf{H}_k$ such that the quantization error is minimized.

With the QR factorization of $\mathbf{H}_k^T = \mathbf{Q}_k \mathbf{R}_k$ where $\mathbf{Q}_k \in \mathbf{C}^{MxN}$ is a matrix with orthonormal columns and $\mathbf{R}_k \in \mathbf{C}^{NxN}$ is upper triangular, the CVQ of the composite channel vector is obtained by choosing the codebook entry in C which is closest to the row space of $\mathbf{H}_k$ with respect to the Euclidean distance:

$$\hat{g}_k = u_\ell, \quad \ell = \operatorname*{argmax}_{q \in \{1,\dots,2^B\}} \|Q_k^{\mathrm{H}} u_q\|_2^2.$$

$$(10)$$

Then, the approximation of the composite channel vector is obtained by projecting $\hat{g}_k$ back into the row space of $\mathbf{H}_k$

$$\mathring{g}_k = Q_k Q_k^{\mathrm{H}} \hat{g}_k / \left\| Q_k Q_k^{\mathrm{H}} \hat{g}_k \right\|_2,$$

$$(11)$$

and applying the scaling

$$g_k = \mathring{g}_k / \left\| \mathring{g}_k^{\mathrm{T}} H_k^{\dagger} \right\|_2,$$

$$(12)$$

where $\mathbf{H}_k^{+} = \mathbf{H}_k^{H} \left( \mathbf{H}_k \mathbf{H}_k^{H} \right)^{-1}$ is the right-hand side pseudo-inverse of the matrix $\mathbf{H}_k$. Applying $g_k$ of Eq. (12) to one of Eqs. (8) or (9) yields the CQI value which is the additional feedback information to the codebook index $\ell$.

With the quantized composite channel matrix $\hat{\mathbf{G}}_{\mathbf{K}} = cstack\left(\hat{g}_k^{T}\right)_{k \in \mathbf{K}} \in \mathbf{C}^{|\mathbf{K}| \times M}$, the ZF precoder at the base station computes as (e.g. "S. Verdú. *Multiuser Detection*. Cambridge University Press, 1998.")

$$P_{\mathbb{K}} = P_{\mathbb{K}}' \Lambda_{\mathbb{K}}^{1/2}. \quad P_{\mathbb{K}}' = \hat{G}_{\mathbb{K}}^{\mathrm{H}} \left( \hat{G}_{\mathbb{K}} \hat{G}_{\mathbb{K}}^{\mathrm{H}} \right)^{-1},$$

$$(13)$$

with the diagonal matrix $\Lambda_{\mathbf{K}} \in \mathbf{C}^{|\mathbf{K}| \times |\mathbf{K}|}$ representing power loading. For simulations equal power loading may be assumed where

$$\Lambda_{\mathbb{K}} = \mathrm{diag}\left( \frac{P_{\mathrm{Tx}}}{|\mathbb{K}| \, \|P_{\mathbf{K}}' e_k\|_2^2} \right)_{k=1}^{|\mathbf{K}|}.$$

$$(14)$$

Recall that $|\mathbf{K}| = D$ due to the fact that $d_k = 1$ for all $k \in \mathbf{K}$.

With the codebook indices and the CQI values of all users, the base station schedules the users and computes the ZF precoder as described before. To do so, it calculates the SINR approximations based on the CQI values, i.e., the scaled versions thereof. It holds (e.g. "M. Trivellato, F. Boccardi, and F. Tosato. User selection schemes for MIMO broadcast channels with limited feedback. Vehicular Technology Conference, 2007. VTC2007-Spring. IEEE 65th, pages 2089-2093, April 2007" or "Philips. Comparison between MU-MIMO codebook-based channel reporting techniques for LTE downlink, Oct. 2006. 3GPP TSG RAN WG1 #46 R1-062483").

$$\Gamma_{\mathbb{K}} = \frac{M}{P_{\mathrm{Tx}}} \Lambda_{\mathbb{K}} \, \mathrm{diag}\left(\mathrm{CQI}_k\right)_{k=1}^{|\mathbf{K}|}.$$

$$(15)$$

Then, it schedules the users according to Alg. 1 shown below where $R_{\mathbf{K}} := \Sigma_{q \in \mathbf{K}} \log_2\left(1 + e_q^{T} \Gamma_{\mathbf{K}} e_q\right)$. Please see "M. Trivellato, F. Boccardi, and F. Tosato. User selection schemes for MIMO broadcast channels with limited feedback. Vehicular Technology Conference, 2007. VTC2007-Spring. IEEE 65th, pages 2089-2093, April 2007" and "Philips. Comparison between MU-MIMO codebook-based channel reporting techniques for LTE downlink, Oct. 2006. 3GPP TSG RAN WG1 #46 R1-062483" for a detailed description of Alg. 1. Note that $\overline{D}$ is the maximum number of scheduled data streams (users) which can also be chosen to be smaller than the number of transmit antennas *M*.

Finally, the set **K** of scheduled users is used to compute the ZF precoder according to Eqs. (13) and (14).

---

**Algorithm 1 ZF CVQ resource allocation**

$\mathbb{K} \leftarrow \{\}, \hat{G}_\mathbb{K} \leftarrow 0$
while $|\mathbb{K}| \leq \bar{D}$ do
   $\mathbb{K}' \leftarrow \{k \in \{1, \ldots, K\} \setminus \mathbb{K} : \hat{g}_k^T \neq e_q^T \hat{G}_\mathbb{K} \ \forall q\}$
   for $k \in \mathbb{K}'$ do
      $\hat{G}_\mathbb{K} \leftarrow [\hat{G}_\mathbb{K}; \hat{g}_k]^T$
      compute $P'_{\mathbb{K} \cup \{k\}}$ and $\Lambda_{\mathbb{K} \cup \{k\}}$        ▷ Eqs. (13) and (14)
      compute $\Gamma_\mathbb{K}$        ▷ Eq. (15)
   end for
   $k' \leftarrow \mathrm{argmax}_{k \in \mathbb{K}'} R_{\mathbb{K} \cup \{k\}}$
   if $R_{\mathbb{K} \cup \{k'\}} > R_\mathbb{K}$ then $\mathbb{K} \leftarrow \mathbb{K} \cup \{k'\}$
   else exit
   end if
end while

---

In general, the channel qualities should be known as exactly as possible, while the feedback information should be kept as low as possible.

Patent application WO 01/45300 A1 shows a method and wireless system using multiple antennas and adaptive control for maximizing a communication parameter. This document describes the determination of a quality parameter by using an MxN matrix, wherein N is the number of receive antennas of the receiver.

Further, patent application US 2008/0227495 A1 describes a reference signaling scheme using compressed feed forward codebooks for MU-MIMO systems. Similar to the concept described in document in WO 01/45300 A1, the concept of document US 2008/0227495 A1 also uses a matrix depending on the number of antennas of a subscriber.

Furthermore, patent application EP 1508992 A2 mentions a multiuser Multiple Input Multiple Output radio communication system with a transmitter receiving channel quality information transmitted from receivers, scheduling resources for the receivers within a corresponding scheduling epoch based on the received channel quality information.

It is the object of the present invention to provide an apparatus for an improved determination of a channel quality of a channel between a terminal and a base station of a multiuser multiple-input multiple-output communication system.

This object is solved by an apparatus according to claim 1 and a method according to claim 12.

An embodiment of the invention provides an apparatus for determining a channel quality parameter for a multiple-input multiple-output communication system with a number of data streams being simultaneously provided to terminals by a base station. The channel quality parameter belongs to a channel between one of the terminals and the base station.

The apparatus comprises a processor configured to determine the channel quality parameter based on a number of receive antennas of one of the terminals.

Embodiments according to the present invention are based on the central idea that a terminal with a number N of receive antennas may be able to cancel interference from N-1 interferers. Therefore, the interference between different terminals may be neglected. So, the channel quality parameter may be determined depending on the number of receive antennas to improve the determination of the channel quality.

Some embodiments according to the invention relate to a processor configured to determine the channel quality parameter based on a first channel quality indicator if the number of data streams is equal to or lower than the number of receive antennas and based on a second channel quality indicator if the number of data streams is larger than the number of receive antennas.

Some further embodiments according to the invention relate to an apparatus for selecting terminals to be simultaneously addressed by the base station of the multiple-input multiple-output communication system.

A terminal comprises, for example, an apparatus for providing a channel quality information in a terminal of a multiple-input multiple-output communication system.

Embodiments according to the invention will be detailed subsequently referring to the appended drawings, in which:

Fig. 1        is a block diagram of an apparatus for determining a channel quality parameter;

Fig. 2       is a schematic illustration of a down link channel of a multiuser multiple-input multiple-output system;

Fig. 3       is a block diagram of an apparatus for selecting terminals to be addressed simultaneously by a base station;

Fig. 4       is a schematic illustration of a feedback process if the second feedback quantity is transmitted more often than the first feedback quantity;

Fig. 5       is a "sum rate vs. signal-to-noise ratio" diagram;

Fig. 6       is a "sum rate vs. signal-to-noise ratio" diagram;

Fig. 7       is a "sum rate vs. signal-to-noise ratio" diagram;

Fig. 8       is a block diagram of an apparatus for providing a channel quality information;

Fig. 9       is a flow chart of a method for selecting terminals to be addressed simultaneously by a base station;

Fig. 10      is a flow chart of a method for providing a channel quality information;

Fig. 11      is a schematic illustration of a multiuser multiple-input multiple-output system model;

Fig. 12      is a schematic illustration of a channel vector quantization;

Fig. 13a     is a "sum rate vs. signal-to-noise ratio" diagram;

Fig. 13b     is a Table of simulation parameters used for calculating the diagram of Fig. 13a;

Fig. 14a     is a "sum rate vs. signal-to-noise ratio" diagram; and

Fig. 14b     is a Table of simulation parameters used for calculating the diagram of Fig. 14a.

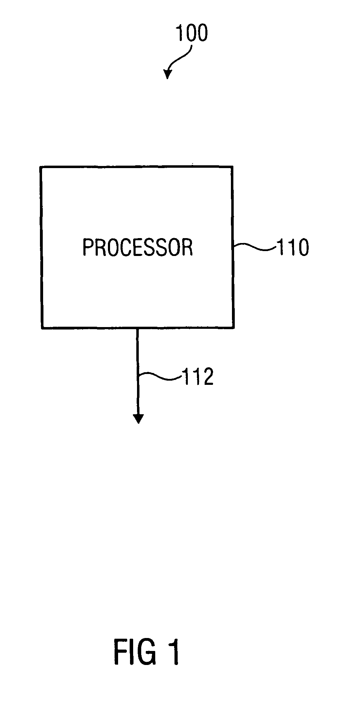

Fig. 1 shows a block diagram of an apparatus 100 for determining a channel quality parameter 112 for a multiple-input multiple-output communication system with a number of data streams being simultaneously provided to terminals by a base station according to an embodiment of the invention. The channel quality parameter 112 belongs to a channel between one of the terminals and the base station.

The apparatus 100 comprises a processor 110 configured to determine the channel quality parameter 112 based on a number of receive antennas of one of the terminals.

Since more than one data stream may be provided simultaneously to terminals by the base station, wherein one or more data streams may be assigned to one terminal, there may be interference between the terminals addressed simultaneously. In this case, the disturbance of a terminal by interference from the other terminals being simultaneously addressed may strongly depend on the number of simultaneously provided datastreams, because a terminal may be able to cancel interference from all other terminals addressed simultaneously if the number of data streams is equal to or less than the number of receive antennas of this terminal. Therefore, the interference between different terminals may be neglected if the channel quality parameter is determined depending on the number of receive antennas. In this way, the determination of the channel quality may be improved.

Since a sum rate of all terminals being simultaneously addressed depends on the quality of the determination of the channel quality, the sum rate may be increased. In other words, with well-known channel qualities, a sum rate of the downlink of a multiuser MIMO system may be  increased. Increasing the sum rate may enable higher data rates per terminal and/or more terminals being addressed simultaneously.

The channel quality parameter 112 may represent the signal-to-interference-and-noise ratio, the signal-to-noise ratio or another parameter related to the channel quality of the channel between the base station and a terminal.

The apparatus 100 may be part of the base station of the multiple-input multiple output communication system.

A terminal may, for example, be a mobile phone, a laptop or another communication device. A terminal may also be called user.

In some embodiments according to the invention, the channel quality parameter is determined based on a first channel quality indicator if the number of data streams is equal or lower than the number of receive antennas of one of the terminals. If the number of data streams is larger than the number of receive antennas of one of the terminals, the channel quality parameter is determined based on a second channel quality indicator.

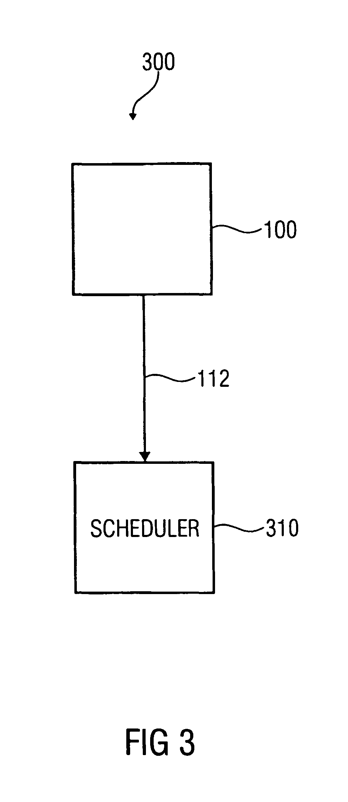

Fig. 3 shows a block diagram of an apparatus 300 for selecting terminals to be addressed simultaneously by a base station of a multiple-input multiple-output communication system according to an embodiment of the invention. The multiple-input multiple-output communication system comprises a plurality of terminals.

The apparatus 300 comprises an apparatus 100 for determining a channel quality parameter 112 as, for example, shown in Fig. 1, connected to a scheduler 310. The apparatus 100 determines, for the plurality of terminals, the channel quality parameter 112 and provides the channel quality parameters 112 to the scheduler 310.

The scheduler 310 selects the terminals to be simultaneously addressed by the base station based on the channel quality parameter 112 of each terminal of the terminals to be simultaneously addressed.

The apparatus 300 may be part of the base station. Further, the scheduler 310 may be a part of a processor of the base station.

In some embodiments according to the invention, the scheduler 310 determines a first transmission parameter for a first set of selected terminals. A number of data streams simultaneously provided to the first set of selected terminals is equal to or less than the number of receive antennas of one of the terminals of the first set of selected terminals. Additionally the scheduler 310 determines a second transmission parameter for a second set of selected terminals. A number of data streams simultaneously provided to the second set of selected terminals is larger than the number of receive antennas of one of the terminals of the second set of selected terminals. Then the scheduler 310 selects the terminals to be simultaneously addressed by the base station based on a comparison of the first transmission parameter and the second transmission parameter.

A transmission parameter may be, for example, a sum rate, a data rate per terminal, the signal-to-interference-and-noise ratio of all terminals being simultaneously addressed or another quantity representing the performance of the multiuser downlink.

It is possible to provide one or more data streams to one selected terminal.

Although some of the following embodiments are related to one data stream per terminal/user, it is easy to see, that the described concept can also be used for situations with more than one data stream per user. In other words, the number of simultaneously provided data streams may be equal to the number of simultaneously addressed terminals/user.

In some further embodiments according to the invention, all terminals being simultaneously addressed by the base station comprises the same number of receive antennas.

Some embodiments according to the invention relate to terminals using minimum means square error filtering. A well-known characteristic of MMSE filtering is that it is the balance between interference cancellation and channel magnitude maximization that is optimal in an SINR sense (e.g. "U. Madhow and M.L. Honig. MMSE interference suppression for direct-sequence spreadspectrum CDMA. Communications, IEEE Transactions on, 42(12):3178-3188, Dec 1994"). For a number of interferers less than or equal to N-1, it may generally be possible via linear filtering to completely cancel the interference, although the MMSE solution may leave residual interference at the benefit of an increased SINR.

It may be assumed that with $D \leq N$, the full interference cancellation solution exists and is given by $\widetilde{\mathbf{w}}_k^T = \mathbf{e}_k^T (\mathbf{H}_k \mathbf{P})^+$ where $\mathbf{e}_k$ is the kth standard basis vector. Due to its SINR maximizing property, it is known that the SINR under MMSE filtering will be at least as good as the SINR under full interference cancellation, such that

$$\mathrm{SINR}_k \geq \mathrm{SINR}_k^{\mathrm{IC}} \quad = \quad \frac{l_k |\tilde{w}_k^T H_k p_k'|^2}{1 + \sum\limits_{i \in \mathbb{K} \backslash \{k\}} |\tilde{w}_k^T H_k p_i|^2}$$

$$\tag{16}$$

$$= \quad l_k |\tilde{w}_k^T H_k p_k'|^2,$$

$$\tag{17}$$

where the SINR equation (5) is rewritten and the fact is used that $\widetilde{\mathbf{w}}_k^T \mathbf{H} \mathbf{p}_i = 0$ (full interference cancellation). Besides, note that $l_k = \mathbf{e}_k^T \mathbf{\Lambda}_k \mathbf{e}_k$ and $\mathbf{p'}_k$ is the kth column of $\mathbf{P'_K}$. Moreover, due to the zero-forcing beamforming matrix $\mathbf{P}$, $\mathbf{w}_k^T \mathbf{H} \mathbf{p}_i \approx 0$, where the approximation is only due to imperfect channel knowledge at the transmitter. In other words, the interferers are already almost canceled from the precoding step, and full cancellation would only require to move the receive weight vector by a small amount. Thus it is assumed here that $\widetilde{\mathbf{w}}_k^T = \mathbf{w}_k^T + \Delta \mathbf{w}_k^T$, where $\Delta \mathbf{w}_k^T$ is a small difference vector. In turn, this allows to make the approximation $\widetilde{\mathbf{w}}_k^T \mathbf{H}_k \mathbf{p}'_k \approx \mathbf{w}_k^T \mathbf{H}_k \mathbf{p}'_k = \mathbf{g}_k^T \mathbf{H}_k$ such that

$$\mathrm{SINR}_k \geq \mathrm{SINR}_k^{\mathrm{IC}} \quad \approx \quad l_k |g_k^{\mathrm{T}} p'_k|^2 \qquad\qquad (18)$$

$$\approx \quad l_k \|g_k\|^2 \cos^2 \theta_k. \qquad\qquad (19)$$

Note that the term in the right of equation (19) may be the SNR approximation of method T1 from "Trivellato et al.: User selection schemes for MIMO broadcast channels with limited feedback. Vehicular Technology Conference, 2007. VTC2007-Spring. IEEE 65th, pages 2089-2093, April 2007". In definitive, it is argued that in a situation where up to $N$ users (or data streams) are simultaneously scheduled (addressed), the final SINR could be approximated by the estimated SNR before MMSE filtering, since the MMSE receiver can efficiently mitigate the residual interference caused by imperfect channel knowledge. An approximation to the SINR may be proposed which differentiates between the cases where the number of scheduled users $D$ (terminals being simultaneously addressed) is equal to or less than $N$ and when it is larger. For example, the step function

$$\mathrm{SINR}_k(D) \approx \begin{cases} \mathrm{SNR}_k \approx \dfrac{M}{P_{\mathrm{Tx}}} l_k \, \mathrm{CQI}_k^{\mathrm{T1}} = l_k \|g_k\|^2 \cos^2 \theta_k, & D \leq N \\[2ex] \dfrac{M}{P_{\mathrm{Tx}}} l_k \, \mathrm{CQI}_k^{\mathrm{T2}} = \dfrac{l_k \|g_k\|^2 \cos^2 \theta_k}{1 + \frac{P_{\mathrm{Tx}}}{M} \|g_k\|^2 \sin^2 \theta_k}, & D > N \end{cases}$$

$$(20)$$

is used as a basis for the evaluation of the SINR of a user k during the feedback and scheduling process. For the case where $D > N$, the same estimate as scheme T2 from "Trivellato et al.: User selection schemes for MIMO broadcast channels with limited feedback. Vehicular Technology Conference, 2007. VTC2007-Spring. IEEE 65th, pages 2089-2093, April 2007" may be kept. As one can see, it is not possible to compute exactly the above without simultaneous knowledge of $D$ and at least two other quantities (for example, $\|\mathbf{g}_k\|^2$ and $\cos^2 \theta_k$). Since D is only known by the base station, the SINR estimate can only be computed there based on user feedback. In the following three feedback and scheduling algorithms are proposed that use this modified SINR evaluation scheme. The first algorithm R1 requires two quantities to be fed back for CQI (channel quality information, channel quality parameter) computation. The last two, R2 and R3, require only one, albeit with a loss in accuracy. The schemes are called *robust* since they allow for improved SINR estimation when $D \leq N$. Among other things, this enables the scheduler to limit the number of scheduled users to $N$ whenever scheduling more users would result in performance loss.

In some embodiments according to the invention, two feedback quantities are received from a terminal by the base station. This may also be called robust scheme R1 or high feedback mode.

Because the knowledge of the number of scheduled users $D$ is required, a direct computation of equation (20) is only possible at the base station. This first algorithm assumes the mobile (terminal) can feedback two quantities $\gamma_{k,1}$ (first feedback quantity) and $\gamma_{k,2}$ (second feedback quantity) per sub-carrier for the CQI (channel quality parameter, $CQI_k^{\bullet}$) computation. In such a case, simply $\gamma_{k,1} = CQI_k^{T1}$ and $\gamma_{k,2} = CQI_k^{T2}$. At first glance, it seems that the new CQI could simply be computed at the base station via

$$\mathrm{CQI}_k^{\bullet} = \begin{cases} \gamma_{k,1} = \mathrm{CQI}_k^{\mathrm{T1}}, & D \leq N, \\[1ex] \gamma_{k,2} = \mathrm{CQI}_k^{\mathrm{T2}}, & D > N. \end{cases}$$

$$(21)$$

However, it may be also necessary to consider the scheduling process. As mentioned before a greedy scheduling scheme (Algorithm 1) is used which incrementally builds the set of scheduled users (terminals being simultaneously addressed). It turns out that a mere substitution of the CQI (channel quality parameter) computation step by equation (21) sometimes results in poorer performance than the original schemes because of the way the set of scheduled users is built. In particular, in situations where more than N users are finally scheduled, using the above CQI (channel quality parameter) results in the first $N$ users being selected based purely on their SNR approximation. However, when a ($N$ + 1)th user or more is added to the set, the SINR of the first $N$ users can sharply decrease since the quality of the interference cancellation during their selection is not considered. Therefore, it is argued that in such situations, it is better to build the user set with the assumption that more than $N$ users will finally be scheduled, and use measure $CQI_k^{T2}$ (second channel quality indicator) at each iteration. However, in the case where $N$ or less users should finally be scheduled, it may be preferable to use measure $CQI_k^{T1}$ (first channel quality indicator). In practice, this can be achieved by modifying the scheduling process to include two greedy scheduling runs. Each of the runs is similar to what was previously described. In the first run, measure $CQI_k^{T1}$ is used and the number of scheduled users is limited to N. Then a second run is started, where measure $CQI_k^{T2}$ is used instead. Finally, the set of scheduled users chosen is the one between the two runs that yields the highest estimated transmission parameter, for example the sum rate. Moreover, in order to promote the scheduling of a large amount of users, one can define a constant $\alpha$ that artificially reduces the estimated rate of the scheduling run with a user limit. It was experimentally found that such a constant helps achieving a higher rate for a certain transmit SNR range.

The CQI (channel quality parameter, $CQI_k^{R1}$ ) computation at the base station for scheme R1 may thus be defined as

$$
\mathrm{CQI}_k^{\mathrm{R1}} = \begin{cases} \alpha\gamma_{k,1} & = & \alpha\,\mathrm{CQI}_k^{\mathrm{T1}}, & \text{scheduling run 1} \quad (D \le N), \\ \gamma_{k,2} & = & \mathrm{CQI}_k^{\mathrm{T2}}, & \text{scheduling run 2}, \end{cases}
$$

$$(22)$$

with the two-run scheduling process previously described. Here, $\alpha \in [0,1]$ can be determined through some calibration process (for example, $\alpha$=0.6 is used). As before, the SINR (for all terminals to be addressed simultaneously) is computed from the CQI (channel quality parameter) via Eq. (15).

In some further embodiments according to the invention, only one feedback quantity is received from a terminal by the base station. This may also be called robust scheme R2 or low feedback with short-term SNR knowledge.

As described, the feedback and scheduling scheme R1 requires two scalars to be fed back to the base station in order to compute the CQI (channel quality parameter) information. This feedback load may be reduced to one scalar (feedback quantity) only. This may result in an approximation of the SINR evaluation step function of Eq. (20) since the knowledge of two quantities, plus the number of scheduled, users $D$, is required for its exact computation. In this scheme, only one channel magnitude-related quantity $\gamma_k = \dfrac{P_{Tx}}{M}\|\mathbf{g}_k\|^2$ is fed back to the base station. The channel quality indicators $CQI_k^{T1}$ and $CQI_k^{T2}$ are then approximated from the value of $\gamma_k$. This simultaneous knowledge of the approximations of $CQI_k^{T1}$ and $CQI_k^{T2}$, called $CQI_k^{\overline{T1}}$ and $CQI_k^{\overline{T2}}$, allows the base station to approximate the step function of Eq. (20).

$CQI_k^{\overline{T1}}$ and $CQI_k^{\overline{T2}}$ may be computed from $\gamma_k$ with

$$
CQI_k^{\overline{T1}} = \gamma_k(1-\delta),
$$

$$(23)$$

$$CQI_k^{\overline{T2}} = \frac{\gamma_k(1-\delta)}{1+\gamma_k\delta}$$

(24)

where $\delta$ is a small quantity related to the quantization angle and may be called approximation parameter. To yield the exact value of $CQI_k^{T1}$ and $CQI_k^{T1}$, one would need to set the approximation parameter $\delta$ to $\sin^2 \theta_k$, but the knowledge of this quantity is not available at the base station. Instead, one needs to pre-set a value for the approximation parameter $\delta$. A sensible choice would be, for example, a statistical measure of $\sin^2 \theta_k$, such as the mean or the median value. In general, channel vector quantization will yield a relatively small quantization angle. Therefore, it can be argued that the probability distribution function of $\sin^2 \theta_k$ will be rather tight on the right of zero, and that it may make sense to approximate $\sin^2 \theta_k$ with a statistical measure.

The CQI (channel quality parameter) computation formula for scheme R2 may then be given by

$$CQI_k^{R2} = \begin{cases} \alpha\gamma_k = \alpha\, CQI_k^{\overline{T1}}, & \text{scheduling run 1 } (D \le N) \\ f(\gamma_k) = CQI_k^{\overline{T2}}, & \text{scheduling run 2,} \end{cases}$$

(25)

with the scheduling runs and the constant $\alpha$ being defined the same way as in scheme R1. Since this method assumes the feedback of quantity $\gamma_k$, and $\text{SNR}_k \propto \gamma_k (1-\delta)$ where $(1-\delta) \approx 1$, the base station has a quite accurate knowledge of the users' SNRs on a short-term basis. In situations where multiuser scheduling with $D > N$ is not beneficial, this method will barely suffer any performance loss with respect to method R1, since the SNR is the basis for the scheduling in this situation. However, some performance degradation may be expected when scheduling with $D > N$, due to the lack of information on the instantaneous quantization angle.

In some embodiments according to the invention, two feedback quantities are received from a terminal by the base station, wherein one feedback quantity is received more often than the other. This may also be called robust scheme R3 or low feedback with long-term SNR knowledge.

With this method, it is again tried to obtain simultaneous knowledge of both the SNR indication $CQI_k^{T1}$ (first channel quality indicator) and the SINR estimation $CQI_k^{T2}$ (second quality indicator) at the base station with only one fed back scalar per user for CQI (channel quality parameter) computation. In method R2, the quantity $CQI_k^{T2}$ was approximated from the value of $\gamma_k$ which is approximately proportional to the user's SNR. Here, a different approach is taken by trying to exploit temporal features of the mobile channel to reduce the feedback load. Recall that

$$\text{SNR}_k \approx \frac{M}{P_{\text{Tx}}} l_k\, \text{CQI}_k^{T1} \propto \|g_k\|^2 \cos^2 \theta_k = \|w_k^T H_k\|^2 \cos^2 \theta_k.$$

(26)

The squared magnitude of the product $\mathbf{w}_k^T \mathbf{H}_k$ depends on all N x M entries of $\mathbf{H}_k$. In a typical radio channel, these entries are random variables that follow probabilistic models (e.g., Rayleigh fading). Moreover, Doppler oscillations will occur with a phase shift between the subchannels, for example, in case of an OFDM system. Because all of those subchannels contribute to the value of $\left\|\mathbf{w}_k^T \mathbf{H}_k\right\|^2$, a certain "averaging" effect takes place. Therefore, it is expected that this quantity will not vary as fast in time as the individual entries of the matrix $\mathbf{H}_k$. The quantity $\cos^2 \theta_k$ will also be quite stable since $\theta_k$ is generally small and thus $\cos^2 \theta_k \approx 1$. In other words, one can argue that the SNR of a user with a virtual 1 x M channel created from a linear combination of its receive antennas has an extended correlation in time.

For example, it is assumed that the CQI (channel quality indicator) information is periodically transmitted from the users (terminals) to the base station with a period of $\tau_{fb}$. Each time a feedback report is received, a new scheduling immediately takes place. The idea of scheme R3 is to use "feedback multiplexing" where either one of two quantities is transmitted in a given feedback report. It is argued above that the SNR will have a potentially slow rate of variation. On the other hand, one can expect the quantity $CQI_k^{T2}$ (second channel quality indicator) to vary quickly since it contains a factor of $1/(1+(P_{Tx}/M)\sin^2 \theta_k)$, where $\theta_k$ is small and can change abruptly for different channel realizations. The idea is thus to frequently feedback $CQI_k^{T2}$ (as second feedback quantity) and multiplex an infrequent feedback of a quantity $CQI_k^{\overline{T1}}$ (as first feedback quantity) which is related to $CQI_k^{T1}$ (first channel quality indicator) and contains an indication of the user's SNR. Let $\gamma_k[i]$ be the quantity that is fed back at time $t = i\tau_{fb}$, where $i \in N$ is a feedback report index. A feedback scheme is proposed where

$$\gamma_k[i] = \begin{cases} CQI_k^{\overline{T1}}[i], & i = nC_1, \\ CQI_k^{T2}[i], & \text{otherwise,} \end{cases} \qquad (27)$$

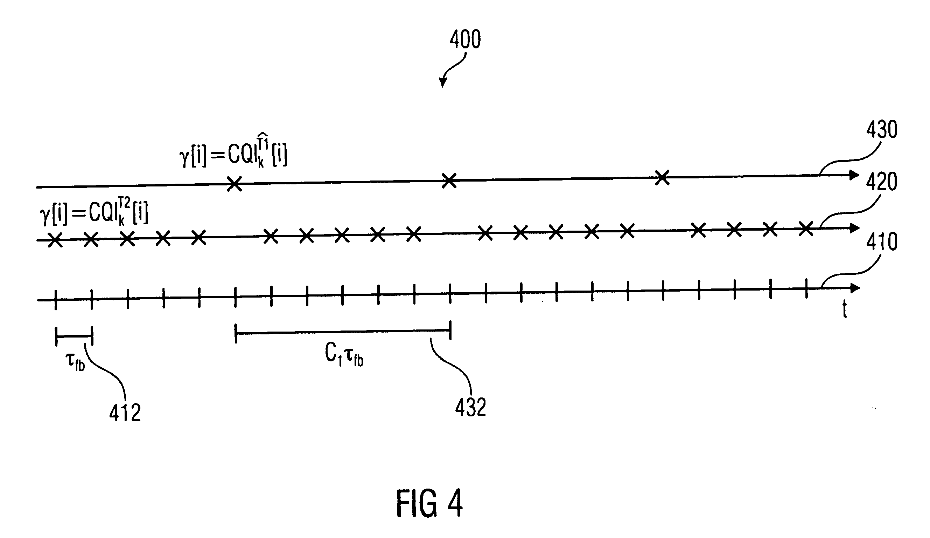

for all $n \in N$. The value $C_1 \in N$ denotes the length of the transmission period (in feedback intervals) of quantity $CQI_k^{\overline{T1}}$ (first feedback quantity). This feedback process 400 is illustrated in Figure 4.

The first time line 410 shows the intervals $\tau_{fb}$ 412 at which the base station receives a feedback quantity from a terminal. Fittingly, the second time line 420 illustrates at which times the second feedback quantity is received and the third time line 430 shows at which times the first feedback quantity is received. In this example, the transmission period 432 of the first feedback quantity is equal to six time intervals 412.

For the scheduling process, it is proposed to use the same two-runs scheduling as was described for scheme R1. There, the current value of both quantities $CQI_k^{T1}$ and $CQI_k^{T2}$ was known at scheduling time. However, here, the current value of only one of the two feedback quantities $CQI_k^{\overline{T1}}$ or $CQI_k^{T2}$ will be available. At scheduling time, it may be distinguished between two situations:

1. Quantity $CQI_k^{\overline{T1}}[i]$ was just received ($i = nC_1$).

2. Quantity $CQI_k^{T2}[i]$ was just received (any other i).

In Situation 2, basically the same scheduling strategy as in scheme R1 is applied, with a small modification. In the scheduling run with $D \le N$, the last received value of the SNR indicator $CQI_k^{\overline{T1}}[j]$ instead of the instantaneous value of $CQI_k^{T1}[i]$ is used since it is not available. Note that $j = \lfloor i/C_1 \rfloor C_1$. The rest of the scheduling process may be identical to R1.

In Situation 1, the problem is slightly different. Here, an instantaneous knowledge of $CQI_k^{T2}[i]$ which is expected to be a fast-varying quantity is not available. In this case, it is proposed to simply skip the scheduling run that uses this quantity and only perform the $D \le N$ scheduling run with the just received $CQI_k^{\overline{T1}}[i]$ quantity. Note that situation 1 only occurs once every $C_1$ feedback report. Therefore, for large $C_1$, the impact of this skipping becomes negligible.

The definition of the channel quality estimation $CQI_k^{R3}$ (channel quality parameter) for scheme R3 is summarized in the following equations:

Case $i = nC_1$ :

$$CQI_k^{R3}[i] \quad = \quad \gamma[i] = CQI_k^{\overline{T1}}[i], \quad \text{Scheduling run 1 } (D \le N),$$

Case $i \ne nC_1$ :

$$CQI_k^{R3}[i] \quad = \quad \begin{cases} \gamma[i] = CQI_k^{\overline{T1}}[j], & \text{Scheduling run 1 } (D \le N) \\ \gamma[i] = CQI_k^{T2}[i], & \text{Scheduling run 2} \end{cases} \quad (28)$$

with $j = \lfloor i/C_1 \rfloor C_1$ as before. The quantity $CQI_k^{\overline{T1}}[i]$ should be defined next. Note that due to the above scheduling process, this SNR indication (when fed back at time index i) is used for all scheduling occurring between indices i and $i+C_1-1$. In order to have a robust scheme, situations where the outdated SNR indicator is higher than the current one should be avoided as much as possible. Therefore, it may be suggested to

$$CQI_k^{\overline{T1}}[i] = \min_{i' \in \{i-C_1+1, \dots, i\}} CQI_k^{T1}[i'],$$

$$(29)$$

i.e., the minimum $CQI_k^{T1}[i]$ over the last C1 period may be transmitted. With such an indicator selection criterion, it is aimed to minimize the instances where the $D \le N$ scheduling run would falsely yield a higher estimated rate than the unrestricted run. Note that alternatives such as the time average or an arbitrary percentile of the distribution of $CQI_k^{T1}[i]$ over the last period could also be considered.

Due to the feedback multiplexing, the base station needs to be aware of which quantity is fed back by the users. For example, in cases where feedback information is transmitted upon a request from the base station, one could simply define two different commands that define which quantity is requested. However, in cases where the users send periodic feedback without intervention from the BS, for example, either a synchronization mechanism would need to be implemented or an extra information in the feedback payload would identify the transmitted quantity. In that case, the former may not increase the feedback load at the expense of increased implementation complexity and possibly extra synchronization information. On the other hand, the latter would be feasible at a low implementation cost, at the expense of a slightly increased feedback information. Note that only one bit is needed to identify the transmitted quantity. Moreover, this information bit can simultaneously describe the feedback quantity for all sub-carriers, such that the overall load in a feedback report that covers multiple sub-carriers may only be increased by one bit.

Some embodiments according to the invention relate to simulation results.

In the following simulations, the aim is to compare the state-of-the-art feedback and scheduling schemes T1 and T2 from "M. Trivellato, F. Boccardi, and F. Tosato. User selection schemes for MIMO broadcast channels with limited feedback. Vehicular Technology Conference, 2007. VTC2007-Spring. IEEE 65th, pages 2089-2093, April 2007" to the results obtained with the proposed robust schemes R1, R2, and R3. The parameters used for these simulations are shown in the Table below. In the following, the method T1-Limit denotes the T1 scheme where the number of maximum data streams D is limited to the number of receive antennas N, i.e., $D \le \overline{D} = N$.

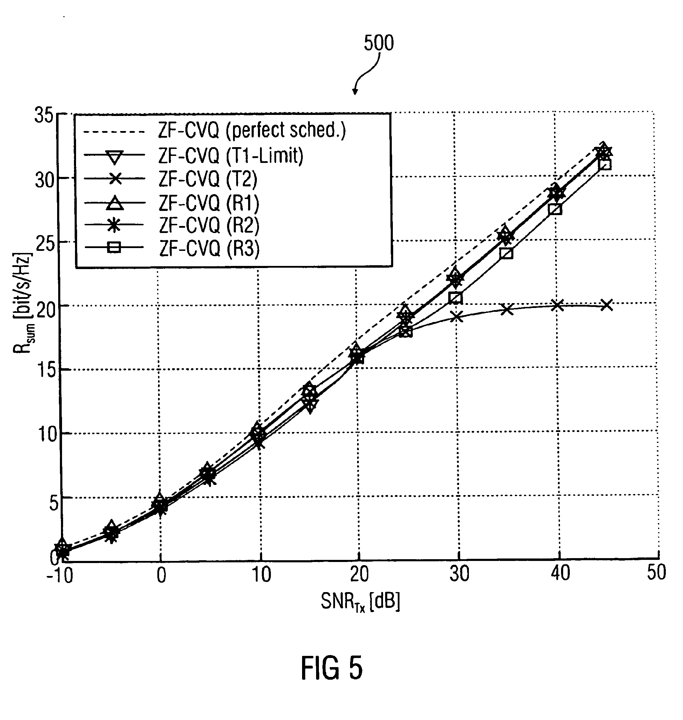

Figure 5 is taken to discuss the results of the robust scheme R1. It shows a "sum rate vs. signal-to-noise ratio" diagram 500 for a zero-forcing (ZF) receiver with channel vector quantization (CVQ) with different feedback using DFT (discrete Fourier transform) codebook, wherein the distance between receive antennas of the terminal $d_a^{UE}$ and the distance of the receive antennas of the base station $d_a^{BS}$ is equal to $3.5\lambda_c$ ($d_a^{UE} = d_a^{BS} = 3.5\lambda_c$).

| Parameter | Variable | Value |
|---|---|---|
| # Tx ant. | $M$ | 4 |
| # Rx ant. | $N$ | 2 |

(continued)

| Parameter | Variable | Value |
|---|---|---|
| # users | $K$ | 10 |
| Carrier frequency | $f_c = c/\lambda_c$ | 2.0 GHz |
| Bandwidth | $f_{BW}$ | 18 MHz |
| FFT size | $N_{FFT}$ | 2048 |
| # subcarriers | $N_{SG}$ | 1200 |
| # feedback bits | $B$ | 4 |
| Feedback period | | 1.0 ms |
| SINR quantization | | No |
| Channel model | | WINNER |
| Path loss used | | No |
| BS-UE distance | | - |
| Mobile speed | | 1.0 m/s |
| Ant. spacing at BS | $d_a^{BS}$ | see caption |
| Ant. spacing at UE | $d_a^{UE}$ | see caption |

The first thing one can notice is that this scheme yields superior performance for the whole transmit SNR range. However, remember that R1 requires two quantities to be fed back by the users for CQI (channel quality parameter) evaluation. The key feature of scheme R1 is illustrated here as it is able to perform as well or better than T2 in the low and mid-SNR range, when scheduling more than $N$ users is beneficial. At high SNR, when limiting the number of users to $N$ is preferable, algorithm R1 is able to join the performance curve of T1-Limit. It thus performs a smooth linking between curves T2 and T1-Limit. In fact, for all graphs presented, R1 is the best scheme for the whole transmit SNR range. These results are rather encouraging and suggest that SINR estimation based on the step function of Eq. (20) produces better results overall than any of the schemes seen so far.

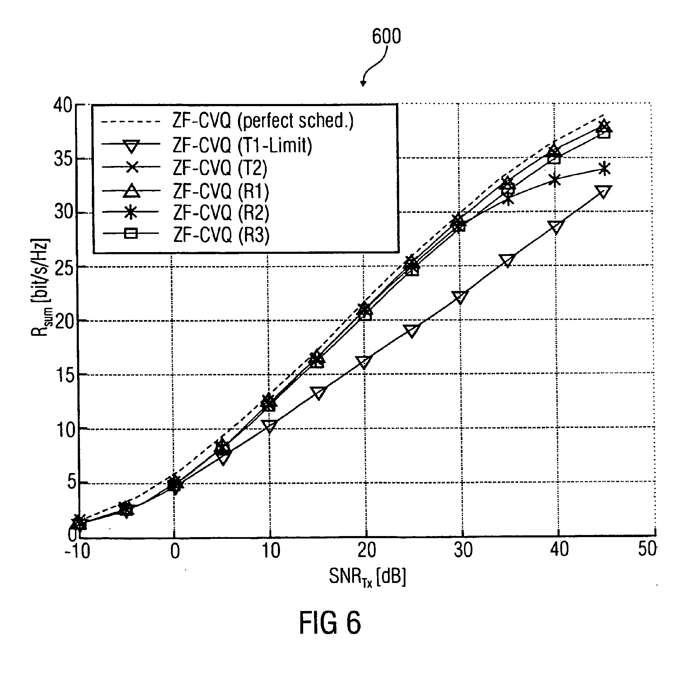

The performance of the robust scheme R2, which only requires one feedback parameter for CQI evaluation is discussed next. In the case of algorithm R2, one can see that its performance never falls below T1-Limit. This would be expected since both of these schemes work with an accurate knowledge of the users' SNRs. Moreover, in situations where T2 performs better than T1-Limit, algorithm R2 is sometimes able to approach the performance of T2. This is the case with the DFT codebook and an antenna separation of $0.5\lambda_c$, as can be seen in, e.g., Figure 6. It shows a "sum rate vs. signal-to-noise ratio" diagram 600 for zero-forcing (ZF) receiver with channel vector quantization (CVQ) with different feedback using DFT codebook, wherein the distance between receive antennas of the terminals $d_a^{UE}$ and the distance of the receive antennas of the base station $d_a^{BS}$ is equal to $0.5\lambda_c$ ($d_a^{UE} = d_a^{BS} = 0.5\lambda_c$).

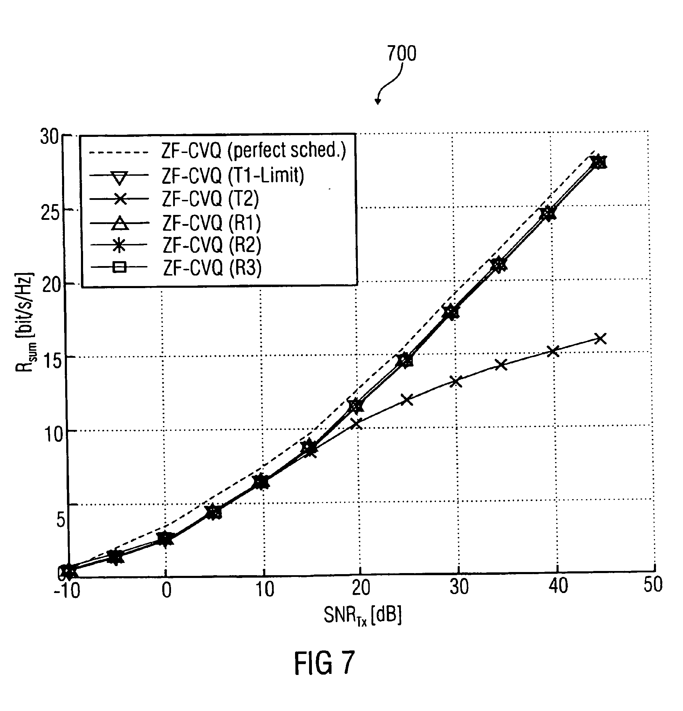

However, at other times (e.g., DFT codebook with antenna separation of $3.5\lambda_c$), the algorithm is not able to perform much better than T1-Limit. It appears that R2 is superior to T1-Limit in situations where the sum rate gap between T2 and T1-Limit is large, and in these simulations it never performs worse than T1-Limit. However, R2 suffers a performance loss with respect to T2 in situations where T2 is superior to T1-Limit. This performance loss varies in function of the transmit SNR. In summary, it would seem that using algorithm R2 in settings where T1-Limit is the best algorithm of the current schemes does not cause any performance loss, as is the case when, e.g., using the random or Grassmannian codebook with B = 4. This is illustrated in Figure 7. It shows a "sum rate vs. signal-to-noise ratio" diagram 700 for zero-forcing receiver with channel vector quantization with different feedback using a random codebook, wherein the distance between receive antennas of the terminals $d_a^{UE}$ and the distance of the receive antennas of the base station $d_a^{BS}$ is equal to $0.5\lambda_c$ ($d_a^{UE} = d_a^{BS} = 0.5\lambda_c$).

On the other hand, the algorithm yields acceptable performance when T2 is the best scheme, such as when the DFT codebook is used with a highly correlated channel. The R2 scheme needs the approximation parameter $\delta$, also called calibrating parameter. As this value may change over time, it might be necessary to design a scheme where the users to regularly update this value and communicate it to the base station.

Next the results for algorithm R3 are analyzed. In the SNR ranges where T2 is superior to T1-Limit, one can see that the performance of R3 follows closely the one from T2. This can be observed, e.g., in Figure 5 between 0 and 15 dB. Indeed, that can be expected since the scheme R3 is based on the users feeding back the quantity $CQI_k^{T2}$ most of the time. The small difference that remains between the two schemes is due to the one out of C1 feedback reports where $CQI_k^{T2}$ is not feedback, but rather the SNR indicator $CQI_k^{\overline{T1}}$. This forces the algorithm to set $CQI_k^{T2}$ to zero in those cases and results in a minor performance loss. In the simulations, the feedback cycles of the users all begin at the same time instant, which means that one out of $C_1$ scheduler decision only have quantities $CQI_k^{\overline{T1}}$ available.

The remaining $C_1$-1 out of $C_1$ scheduler decisions have the instantaneous CQI indicator $CQI_k^{T2}$ and outdated indicator $CQI_k^{\overline{T1}}$ available for all users. Therefore, these $C_1$ - 1 out of $C_1$ decisions should produce the same result as T2 when T2 is superior to T1-Limit. One can see that by using a larger $C_1$, the minor performance loss in such situations will further decrease.

Focusing on the ranges where T1-Limit is superior to T2, as can be seen, e.g., on Figure 5 for transmit SNRs larger than 22 dB, the algorithm R3 allows for the same rate of increase as T1-Limit, albeit with a constant performance loss ($\approx$ 1.5 dB on the example figure). Indeed, in the high SNR situations where it is preferable to limit the users to N, quantity $CQI_k^{\overline{T1}}$ must be used for the scheduling decisions. This quantity is generally outdated since it is not frequently transmitted. Therefore, it does not contain an indication of the instantaneous user SNR but rather an indication of the worse user SNR over the period before the indicator was transmitted to the base station. As one can expect, scheduling based on this indicator causes performance degradation with respect to scheduling based on instantaneous SNR as with T1-Limit.

In summary, one can conclude that the proposed schemes perform good for all investigated scenarios whereas the state-of-the-art methods degrade drastically for specific channel conditions.

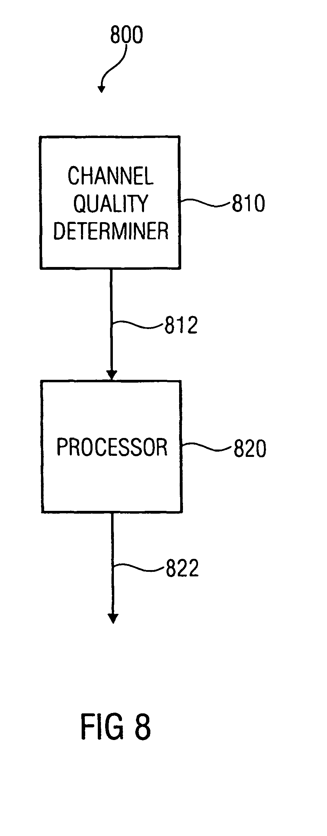

Fig. 8 shows a block diagram of an apparatus 800 for providing a channel quality information 822 in a terminal of a multiple-input multiple-output communication system. The apparatus 800 comprises a channel quality determiner 810 and a processor 820.

The channel quality determiner 810 determines a channel quality 812 of a channel between the terminal and the base station.

The channel quality determiner 810 is connected to the processor 820 and provides the determined channel quality 812 to the processor 820.

The determined channel quality 812 may correspond to the channel matrix of the channel between the terminal and the base station.

The processor 820 determines a value of only one feedback quantity based on the determined channel quality 812 and provides the feedback quantity as the channel quality information 822. Alternatively, the processor 820 determines values of two feedback quantities based on the determined channel quality 812 and provides these two feedback quantities as the channel quality information 822. The first feedback quantity is determined as often as the second feedback quantity or the second feedback quantity is determined more often than the first feedback quantity.

The apparatus 800 may be part of a terminal of the multiple-input multiple-output communication system.

Some embodiments according to the invention relate to a method for determining a channel quality parameter for a multiple-input multiple-output communication system with a number of data streams being simultaneously provided to terminals by a base station. The channel quality parameter belongs to a channel between one of the terminals and the base station.

The method comprises determining the channel quality parameter based on the number of receive antennas of one of the terminals.

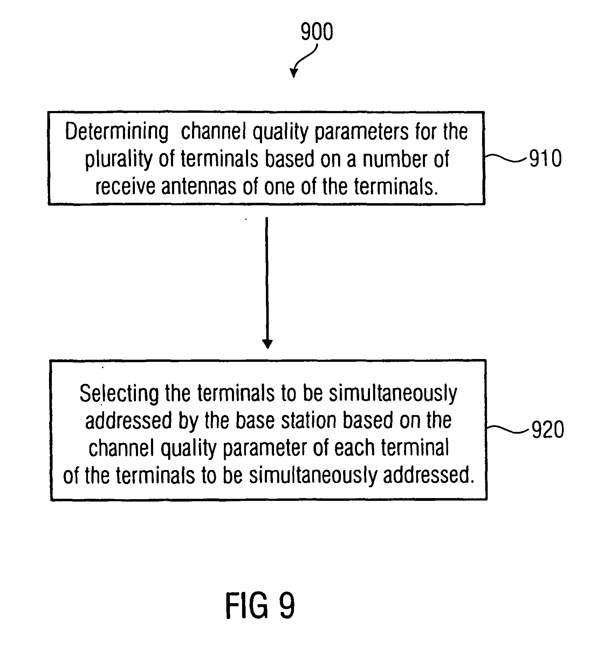

Fig. 9 shows a flow chart of a method 900 for selecting terminals to be addressed simultaneously by a base station of a multiple-input multiple-output communication system according to an embodiment of the invention. The multiple-input multiple-output communication system comprises a plurality of terminals.

The method 900 comprises determining 910 channel quality parameters for the plurality of terminals and selecting 920 the terminals to be simultaneously addressed.

The channel quality parameters for the plurality of terminals are determined based on the number of receive antennas of one of the terminals.

The terminals to be simultaneously addressed by the base station are selected based on the channel quality parameter of each terminal of the terminals to be simultaneously addressed.

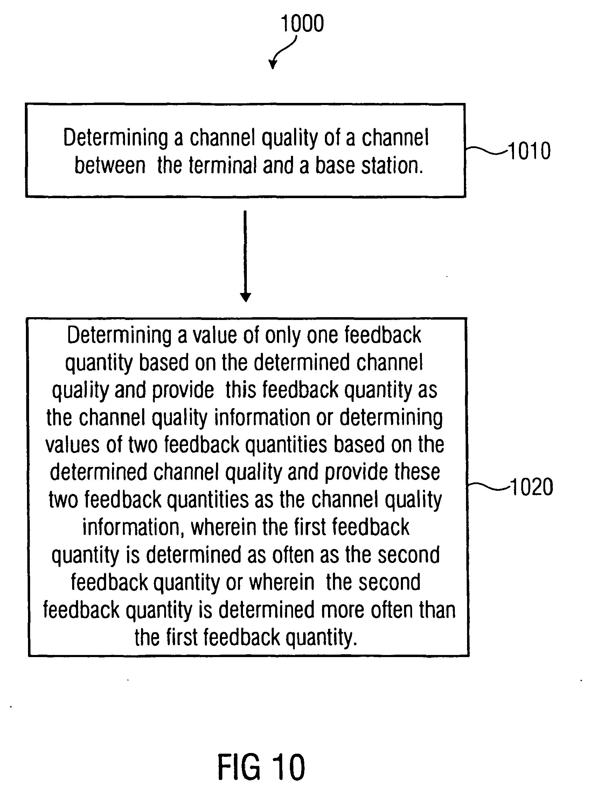

Fig. 10 shows a flow chart of a method 1000 for providing a channel quality information in a terminal of a multiple-input multiple-output communication system. The method 1000 comprises determining 1010 a channel quality of a channel between the terminal and the base station and determining 1020 a value of only one feedback quantity or of two feedback quantities.

Determining 1020 the value of the one feedback quantity is based on the determined channel quality. This feedback quantity may be provided as the channel quality information. Alternatively, values of two feedback quantities are determined based on the determined channel quality and then these two feedback quantities may be provided as the channel quality information. In this case, the first feedback quantity is determined as often as the second feedback quantity or the second feedback quantity is determined more often than the first feedback quantity. Some embodiments according to the invention relate to an approximation of a signal-to-interference-and-noise ratio. The quality of the approximation depends strongly on the number of finally scheduled data streams (selected terminals to be addressed simultaneously), which is not taken into account by state of the art methods. The presented concept may improve the performance of the scheduler by exploiting this dependency and adapting the feedback information accordingly.

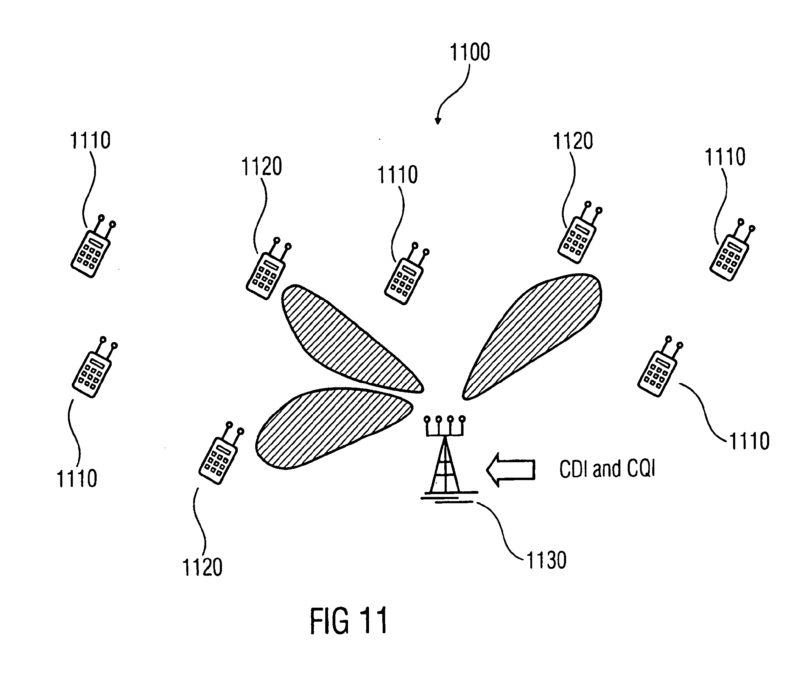

Some further embodiments according to the invention relate to a feedback method with compressed channel quality indication. This may be implemented in a multiuser multiple-input multiple-output (MIMO) system model 1100, for example, shown in Fig. 11. It shows a plurality of terminals 1110 with terminals 1120 being simultaneously addressed by a base station 1130.

A mitigation of multiuser interference may be done by linear precoding, for example, Zero-Forcing (ZF) at the transmitter/eNB (enhanced Node B) and scheduling, for example, with a greedy algorithm aiming at high sum rate. This may require a Channel State Information (CSI) at the transmitter/eNB (at the base station). A channel state information may be represented by a Channel Direction Information (CDI) via Channel Vector Quantization (CVQ) and a Channel Quality Information (CQI), for example, a Signal-to-Interference-and-Noise ratio (SINR).

The quantization of a channel-receiver chain vector $\mathbf{g}_k = \mathbf{H}_k^T \mathbf{w}_k$ (the composite channel vector) may be done by choosing a codebook entry with minimum Euclidean distance to $\mathbf{g}_k$. A problem is that the channel-receive chain vector is not known at the quantization step, because it depends on the precoder (used by the base station).. One possibility may be to estimate the composite channel vector by choosing the closest vector (minimum Euclidean distance) in the range space of the transpose channel matrix.

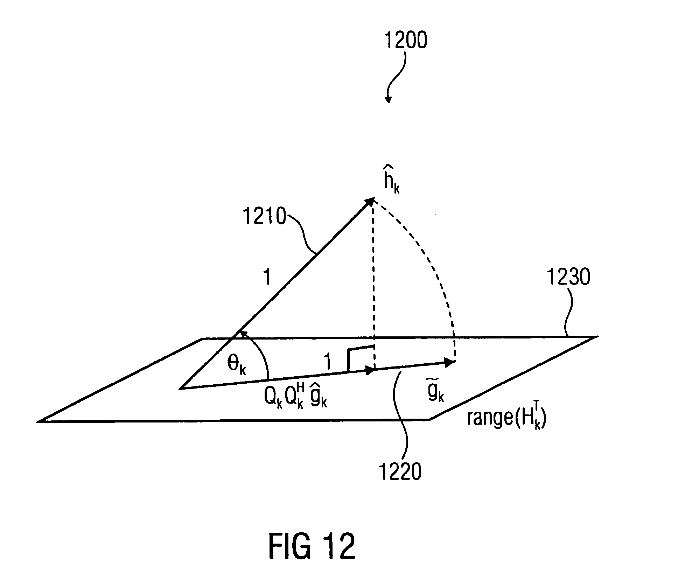

Fittingly, Fig. 12 shows a schematic illustration of a channel vector quantization 1200. It shows a quantized composite channel vector 1210 with the closest codebook entry to the range space 1230 of transpose channel matrix as a channel direction indication. Further, it shows an estimated composite channel vector 1220 needed for the channel quality information computation. The range space 1230 of the transpose channel matrix comprises all possible composite channel vectors.

One possible channel quality indication (CQI) is to estimate the signal-to-interference-and-noise ratio.

$$\mathrm{E}[\mathrm{SINR}_k] \gtrapprox \frac{l_k \|g_k\|^2 \cos^2 \theta_k}{1 + \frac{P_{Tx}}{D} \frac{D-1}{M-1} \|g_k\|^2 \sin^2 \theta_k}$$

In this case, the numerator relates to an estimated signal power, the 1 of the denominator relates to a noise power and the rest of the denominator relates to an estimated interference power due to a quantization error. For calculating the signal-to-interference-and-noise ratio, two quantities may be fed back to the base station.

By using:

$$\frac{D-1}{D(M-1)} \le \frac{1}{M} \quad \forall D \le M \,,$$

the estimated signal interference noise ratio may be written as:

$$\mathrm{E}[\mathrm{SINR}_k] \gtrapprox \frac{l_k \|g_k\|^2 \cos^2 \theta_k}{1 + \frac{P_{Tx}}{M} \|g_k\|^2 \sin^2 \theta_k}$$

In this case, the feedback of only one quantity may be necessary.

Without the interference term, the signal interference noise ratio may be written as:

$$E[SINR_k] \approx l_k \|g_k\|^2 \cos^2 \theta_k$$

Some embodiments according to the invention relate to an estimation of the signal-to-interference-and-noise ratio (SINR) when a minimum means square error (MMSE) receiver is used. A problem for the SINR estimation is that the $\mathbf{w}_k^T$ finally used is different from one assumed for a channel vector quantization and $\mathbf{w}_k^T$ finally used is not known at feedback time.

Particularly, when the number of transmitted data streams (the number of terminals) is smaller than the number of receive (RX) antennas, the minimum mean square error receiver can mitigate all interferers. Therefore, the SINR estimation should depend on the number of transmitted data streams, but this information is not known at the receiver.

Therefore, a feedback of compressed channel quality information may be done. In this way, the signal-to-interference-and-noise ratio may be calculated as follows:

$$SINR_k(D) \approx \begin{cases} l_k \|g_k\|^2 \cos^2 \theta_k, & D \leq N \\ \dfrac{l_k \|g_k\|^2 \cos^2 \theta_k}{1 + \frac{P_{Tx}}{M} \|g_k\|^2 \sin^2 \theta_k}, & D > N \end{cases}$$

This must be computed at the transmitter/eNB (at the base station), because the number of terminals D is only known at the base station. One possibility for the calculation is that two quantities are fed back by a terminal, which was described above as scheme R1. Another possibility is to feed back only one quantity (which means only one quantity per time interval), which was mentioned above as schemes R2 and R3. Using scheme R2, only one quantity is transmitted, for example, $\|g_k\|^2 \cos^2 \theta_k$ and another one is "guessed", for example $\sin^2 \theta_k$. By using scheme R3, a quantity for the case D>N is transmitted most of the time and instead occasionally a measure of, for example, $\|g_k\| \cos^2 \theta_k$ over time is transmitted.

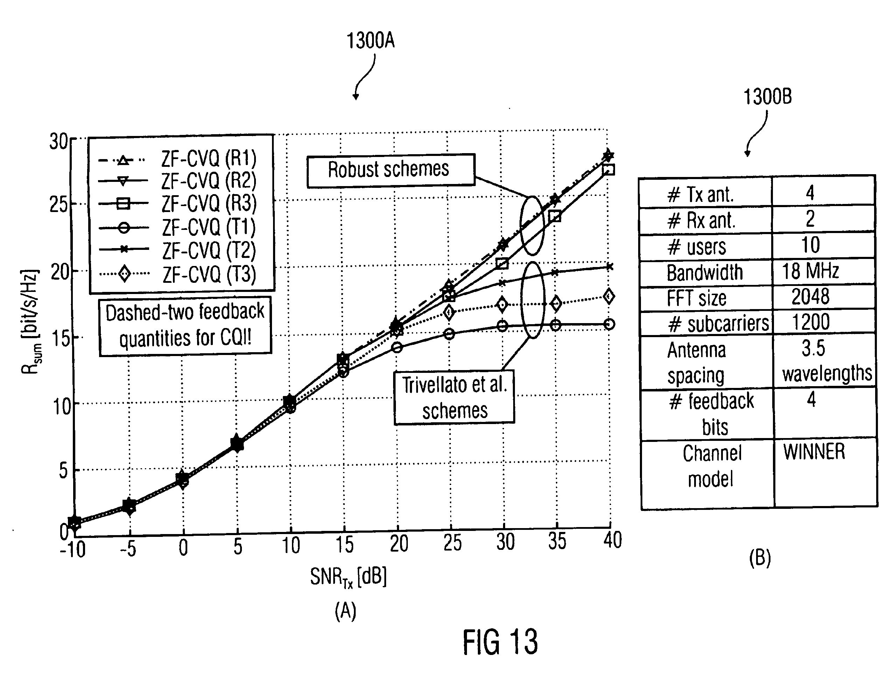

For example, Figs. 13a and 13b show the system performance, with DFT codebook and low correlation. Especially for high signal-to-noise ratios, the described robust schemes R1, R2, R3 result in a higher sum rate than, for example, the schemes introduced in "M. Trivellato, F. Boccardi, and F. Tosato: "User selection schemes or MIMO broadcast channels with limited feedback", Vehicular Technology Conference, 2007. VTC2007-Spring, IEEE 65th, pages 2089-2093, April 2007" as shown in the diagram 1300A of Fig. 13a. Fittingly, Fig. 13b shows a Table 1300B of the simulation parameters used for calculating the diagram 1300A of Fig. 13a.

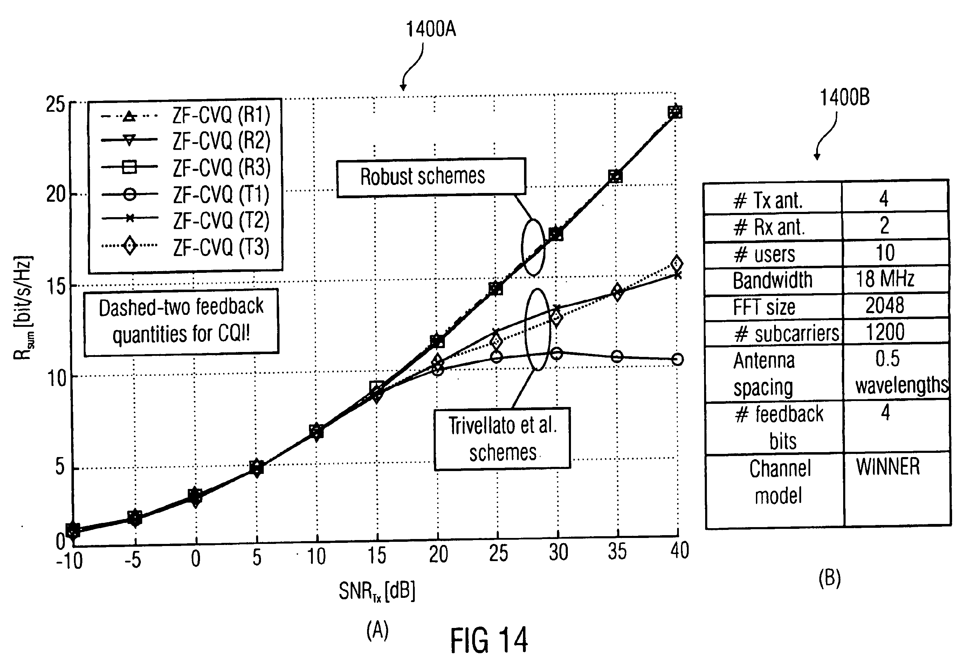

Further, Figs. 14a and 14b show the system performance when using a random codebook with high correlation. Once again, especially for high signal-to-noise ratio, the robust schemes R1, R2, R3 show a better performance in comparison to the schemes introduced in "M. Trivellato, F. Boccardi, and F. Tosato: "User selection schemes or MIMO broadcast channels with limited feedback", Vehicular Technology Conference, 2007. VTC2007-Spring, IEEE 65th, pages 2089-2093, April 2007" as shown in the diagram 1400A of Fig. 14a. Fig. 14b shows a Table 1400B of the simulation parameters used for calculating the diagram 1400A of Fig. 14a.

In some embodiments according to the invention, the described approach increases the sum rate or cell throughput compared to state-of-the-art techniques with the same or less amount of feedback. A higher cell throughput in this case means higher data rates and/or more users per cell (per base station).

Alternatively to increasing the cell throughput, the described approach can be used to decrease transmit power resulting in less costs for power consumption at the base station and/or less electromagnetic radiation.

The proposed schemes exploit the available feedback amount for the channel quality information in a more sophisticated way. This may result in higher cell throughputs compared to state-of-the-art techniques, for example, at high signal-to-noise ratio values.

In the present application, the same reference numerals are partly used for objects and functional units having the same or similar functional properties.

In particular, it is pointed out that, depending on the conditions, the inventive scheme may also be implemented in software. The implementation may be on a digital storage medium, particularly a floppy disk or a CD with electronically readable control signals capable of cooperating with a programmable computer system so that the corresponding method is executed. In general, the invention thus also consists in a computer program product with a program code stored on a machine-readable carrier for performing the inventive method, when the computer program product is executed on a computer. Stated in other words, the invention may thus also be realized as a computer program with a program code for performing the method, when the computer program product is executed on a computer.

**Claims**

1. Apparatus (100) for determining a channel quality parameter (112) for a multiple-input multiple-output communication system with a number of data streams being simultaneously provided to terminals by a base station, wherein the channel quality parameter (112) belongs to a channel between one of the terminals, the one of the terminals comprising receive antennas, and the base station, the apparatus comprising:

   a processor (110) configured to determine the channel quality parameter (112) based on the number of the receive antennas of the one of the terminals,
   wherein the processor (110) is configured to determine the channel quality parameter (112) based on a first channel quality indicator if the number of data streams being simultaneously provided by the base station is equal to or lower than the number of the receive antennas of the one of the terminals and configured to determine the channel quality parameter (112) based on a second channel quality indicator if the number of data streams being simultaneously provided by the base station is larger than the number of the receive antennas of the one of the terminals.

2. Apparatus for determining a channel quality parameter according to claim 1, wherein the processor (110) is configured to determine the channel quality parameter (112) based on a first feedback quantity received from a terminal.

3. Apparatus for determining a channel quality parameter according to claim 2, wherein the processor (110) is configured to determine the first channel quality indicator based on the first feedback quantity and the second channel quality indicator based on a second feedback quantity received from the terminal, wherein the first feedback quantity is received as often as the second feedback quantity or wherein the second feedback quantity is received more often than the first feedback quantity.

4. Apparatus for determining a channel quality parameter according to claim 3, wherein the first feedback quantity or the second feedback quantity is received during one time interval, wherein the terminal determines for a time interval the first feedback quantity and the second feedback quantity, wherein the second feedback quantity is received during N time intervals followed by the first feedback quantity during one time interval, wherein the received first feedback quantity is equal to a minimal first feedback quantity of the first feedback quantities determined during time intervals corresponding to the N time intervals the second feedback quantity is received and the one time interval the first feedback quantity is received.

5. Apparatus for determining a channel quality parameter according to claim 2, wherein the processor (110) is configured to determine the first channel quality indicator and the second channel quality indicator based on the first feedback quantity and an approximation parameter.

6. Apparatus (300) for selecting terminals to be simultaneously addressed by a base station of a multiple-input multiple-output communication system, wherein the multiple-input multiple-output communication system comprises a plurality of terminals, the apparatus comprising:

   an apparatus (100) for determining a channel quality parameter (112) according to one of the claims 1 to 5 determining the channel quality parameters for the plurality of terminals; and
   a scheduler (310) configured to select the terminals to be simultaneously addressed by the base station based on the channel quality parameter (112) of each terminal of the terminals to be simultaneously addressed.

7. Apparatus for selecting terminals to be simultaneously addressed by the base station according to claim 6, wherein the scheduler (310) is configured to select the terminals based on a transmission parameter.

8. Apparatus for selecting terminals to be simultaneously addressed by a base station according to claim 7, wherein the scheduler (310) is configured to determine a first transmission parameter for a first set of selected terminals, wherein a number of data streams simultaneously provided to the first set of selected terminals is equal to or less than the number of receive antennas of one of the terminals of the first set of selected terminals, and configured to determine a second transmission parameter for a second set of selected terminals, wherein a number of data streams simultaneously provided to the second set of selected terminals is larger than the number of receive antennas of one of the terminals of the second set of selected terminals, and configured to select the terminals to be simultaneously addressed by the base station based on a comparison of the first transmission parameter and the second transmission parameter.

9. Apparatus for selecting terminals to be simultaneously addressed by a base station according to one of the claims 6 to 8, wherein all terminals being simultaneously addressed by the base station comprise the same number of receive antennas.

10. Method for determining a channel quality parameter for a multiple-input multiple-output communication system with a number of data streams being simultaneously provided to terminals by a base station, wherein the channel quality parameter belongs to a channel between one of the terminals, the one of the terminals comprising receive antennas, and the base station, the method comprising:

determining the channel quality parameter based on the number of the receive antennas of the one of the terminals by determining the channel quality parameter based on a first channel quality indicator if the number of data streams being simultaneously provided by the base station is equal to or lower than the number of the receive antennas of the one of the terminals and by determining the channel quality parameter based on a second channel quality indicator if the number of data streams being simultaneously provided by the base station is larger than the number of the receive antennas of the one of the terminals.

11. Method (900) for selecting terminals to be simultaneously addressed by a base station of a multiple-input multiple-output communication system, wherein the multiple-input multiple-output communication system comprises a plurality of terminals, the method comprising:

determining (910) channel quality parameters for the plurality of terminals according to the method of claim 10; and
selecting (920) the terminals to be simultaneously addressed by the base station based on the channel quality parameter of each terminal of the terminals to be simultaneously addressed.

12. Method for selecting terminals to be simultaneously addressed by a base station according to claim 11, wherein selecting the terminals to be simultaneously addressed by the base station comprises:

selecting a first set of terminals of the plurality of terminals, wherein a number of data streams simultaneously provided to the first set of terminals is equal or lower than the number of receive antennas of one of the terminals of the first set of terminals;
calculating a first transmission parameter for the first set of terminals;
selecting a second set of terminals of the plurality of terminals, wherein a number of data streams simultaneously provided to the second set of terminals is larger than the number of receive antennas of one of the terminals of the second set of terminals;
calculating a second transmission parameter for the second set of terminals; and
selecting the terminals to be simultaneously addressed by the base station based on a comparison of the first transmission parameter and the second transmission parameter.

13. Computer program with a program code for performing all the method steps according to one of claims 10 to 12, when the computer program runs on a computer or a microcontroller.

**Patentansprüche**

1. Vorrichtung (100) zum Bestimmen eines Kanalqualitätsparameters (112) für ein Mehrfacheingabe/Mehrfachausgabe-Kommunikationssystem mit einer Anzahl von Datenströmen, die gleichzeitig durch eine Basisstation Anschlüssen bereitgestellt wird, wobei der Kanalqualitätsparameter (112) zu einem Kanal zwischen einem der Anschlüsse, wobei der eine der Anschlüsse Empfangsantennen aufweist, und der Basisstation gehört, wobei die Vorrichtung folgende Merkmale aufweist:

einen Prozessor (110), der konfiguriert ist, um den Kanalqualitätsparameter (112) basierend auf der Anzahl der Empfangsantennen des einen der Anschlüsse zu bestimmen,
wobei der Prozessor (110) konfiguriert ist, um den Kanalqualitätsparameter (112) basierend auf einem ersten Kanalqualitätsindikator zu bestimmen, falls die Anzahl von Datenströmen, die gleichzeitig durch die Basisstation bereitgestellt wird, gleich oder geringer ist als die Anzahl der Empfangsantennen des einen der Anschlüsse und konfiguriert ist, um den Kanalqualitätsparameter (112) basierend auf einem zweiten Kanalqualitätsindikator zu bestimmen, falls die Anzahl von Datenströmen, die gleichzeitig durch die Basisstation bereitgestellt wird, größer ist als die Anzahl der Empfangsantennen des einen der Anschlüsse.

2. Vorrichtung zum Bestimmen eines Kanalqualitätsparameters gemäß Anspruch 1, wobei der Prozessor (110) konfiguriert ist, um den Kanalqualitätsparameter (112) basierend auf einer ersten Rückkopplungsgröße zu bestimmen, die von einem Anschluss empfangen wird.

3. Vorrichtung zum Bestimmen eines Kanalqualitätsparameters gemäß Anspruch 2, wobei der Prozessor (110) konfiguriert ist, um den ersten Kanalqualitätsindikator basierend auf der ersten Rückkopplungsgröße und den zweiten Kanalqualitätsindikator basierend auf einer zweiten Rückkopplungsgröße, die von dem Anschluss empfangen werden, zu bestimmen, wobei die erste Rückkopplungsgröße so häufig empfangen wird wie die zweite Rückkopplungsgröße oder wobei die zweite Rückkopplungsgröße häufiger empfangen wird als die erste Rückkopplungsgröße.

4. Vorrichtung zum Bestimmen eines Kanalqualitätsparameters gemäß Anspruch 3, wobei die erste Rückkopplungsgröße oder die zweite Rückkopplungsgröße während eines Zeitintervalls empfangen wird, wobei der Anschluss für ein Zeitintervall die erste Rückkopplungsgröße und die zweite Rückkopplungsgröße bestimmt, wobei die zweite Rückkopplungsgröße während N Zeitintervallen empfangen wird, gefolgt von der ersten Rückkopplungsgröße während eines Zeitintervalls, wobei die empfangene erste Rückkopplungsgröße gleich einer minimalen ersten Rückkopplungsgröße der ersten Rückkopplungsgrößen ist, die während Zeitintervallen bestimmt werden, die den N Zeitintervallen entsprechen, in denen die zweite Rückkopplungsgröße empfangen wird und dem einen Zeitintervall, in dem die erste Rückkopplungsgröße empfangen wird.

5. Vorrichtung zum Bestimmen eines Kanalqualitätsparameters gemäß Anspruch 2, wobei der Prozessor (110) konfiguriert ist, um den ersten Kanalqualitätsindikator und den zweiten Kanalqualitätsindikator basierend auf der ersten Rückkopplungsgröße und einem Näherungsparameter zu bestimmen.

6. Vorrichtung (300) zum Auswählen von Anschlüssen, die gleichzeitig durch eine Basisstation eines Mehrfacheingabe/Mehrfachausgabe-Kommunikationssystems zu adressieren sind, wobei das Mehrfacheingabe/Mehrfachausgabe-Kommunikationssystem eine Mehrzahl von Anschlüssen aufweist, wobei die Vorrichtung folgende Merkmale aufweist:

   eine Vorrichtung (100) zum Bestimmen eines Kanalqualitätsparameters (112) gemäß einem der Ansprüche 1 bis 5, die die Kanalqualitätsparameter für die Mehrzahl von Anschlüssen bestimmt; und
   eine Abwicklungsvorrichtung (310), die konfiguriert ist, um die Anschlüsse auszuwählen, die gleichzeitig durch die Basisstation zu adressieren sind, basierend auf dem Kanalqualitätsparameter (112) jedes Anschlusses der Anschlüsse, die gleichzeitig zu adressieren sind.

7. Vorrichtung zum Auswählen von Anschlüssen, die gleichzeitig durch die Basisstation zu adressieren sind, gemäß Anspruch 6, wobei die Abwicklungsvorrichtung (310) konfiguriert ist, um die Anschlüsse basierend auf einem Übertragungsparameter auszuwählen.

8. Vorrichtung zum Auswählen von Anschlüssen, die gleichzeitig durch eine Basisstation zu adressieren sind, gemäß Anspruch 7, wobei die Abwicklungsvorrichtung (310) konfiguriert ist, um einen ersten Übertragungsparameter für einen ersten Satz von ausgewählten Anschlüssen zu bestimmen, wobei eine Anzahl von Datenströmen, die gleichzeitig dem ersten Satz von ausgewählten Anschlüssen bereitgestellt wird, gleich oder geringer ist als die Anzahl von Empfangsantennen von einem der Anschlüsse des ersten Satzes von ausgewählten Anschlüssen, und konfiguriert ist, um einen zweiten Übertragungsparameter für einen zweiten Satz von ausgewählten Anschlüssen zu bestimmen, wobei eine Anzahl von Datenströmen, die gleichzeitig dem zweiten Satz von ausgewählten Anschlüssen bereitgestellt wird, größer ist als die Anzahl von Empfangsantennen von einem der Anschlüsse des zweiten Satzes von ausgewählten Anschlüssen, und konfiguriert ist, um die Anschlüsse auszuwählen, die gleichzeitig durch die Basisstation zu adressieren sind, basierend auf einem Vergleich des ersten Übertragungsparameters und des zweiten Übertragungsparameters.

9. Vorrichtung zum Auswählen von Anschlüssen, die gleichzeitig durch eine Basisstation zu adressieren sind, gemäß einem der Ansprüche 6 bis 8, wobei alle Anschlüsse, die gleichzeitig durch die Basisstation adressiert werden, die gleiche Anzahl von Empfangsantennen aufweisen.

10. Verfahren zum Bestimmen eines Kanalqualitätsparameters für ein Mehrfacheingabe/Mehrfachausgabe-Kommunikationssystem mit einer Anzahl von Datenströmen, die gleichzeitig durch eine Basisstation Anschlüssen bereitgestellt wird, wobei der Kanalqualitätsparameter zu einem Kanal zwischen einem der Anschlüsse, wobei der eine der Anschlüsse Empfangsantennen aufweist, und der Basisstation gehört, wobei das Verfahren folgende Schritte aufweist:

Bestimmen des Kanalqualitätsparameters basierend auf der Anzahl der Empfangsantennen des einen der Anschlüsse durch Bestimmen des Kanalqualitätsparameters basierend auf einem ersten Kanalqualitätsindikator, falls die Anzahl von Datenströmen, die gleichzeitig durch die Basisstation bereitgestellt wird, gleich oder geringer ist als die Anzahl der Empfangsantennen des einen oder der mehreren Anschlüsse und des einen der Anschlüsse und durch Bestimmen des Kanalqualitätsparameters basierend auf einem zweiten Kanalqualitätsindikator, falls die Anzahl von Datenströmen, die gleichzeitig durch die Basisstation bereitgestellt wird, größer ist als die Anzahl der Empfangsantennen des einen der Anschlüsse.

11. Verfahren (900) zum Auswählen von Anschlüssen, die gleichzeitig durch eine Basisstation eines Mehrfacheingabe/ Mehrfachausgabe-Kommunikationssystems zu adressieren sind, wobei das Mehrfacheingabe/Mehrfachausgabe-Kommunikationssystem eine Mehrzahl von Anschlüssen aufweist, wobei das Verfahren folgende Schritte aufweist:

Bestimmen (910) von Kanalqualitätsparametern für die Mehrzahl von Anschlüssen gemäß dem Verfahren von Anspruch 10; und
Auswählen (920) der Anschlüsse, die gleichzeitig durch die Basisstation zu adressieren sind, basierend auf dem Kanalqualitätsparameter jedes Anschlusses der Anschlüsse, die gleichzeitig zu adressieren sind.

12. Verfahren zum Auswählen von Anschlüssen, die gleichzeitig durch eine Basisstation zu adressieren sind, gemäß Anspruch 11, wobei das Auswählen der Anschlüsse, die gleichzeitig durch die Basisstation zu adressieren sind, folgende Schritte aufweist:

Auswählen eines ersten Satzes von Anschlüssen der Mehrzahl von Anschlüssen, wobei eine Anzahl von Datenströmen, die gleichzeitig dem ersten Satz von Anschlüssen bereitgestellt wird, gleich oder geringer ist als die Anzahl von Empfangsantennen von einem der Anschlüsse des ersten Satzes von Anschlüssen;
Berechnen eines ersten Übertragungsparameters für den ersten Satz von Anschlüssen;
Auswählen eines zweiten Satzes von Anschlüssen der Mehrzahl von Anschlüssen, wobei eine Anzahl von Datenströmen, die gleichzeitig dem zweiten Satz von Anschlüssen bereitgestellt wird, größer ist als die Anzahl von Empfangsantennen von einem der Anschlüsse des zweiten Satzes von Anschlüssen;
Berechnen eines zweiten Übertragungsparameters für den zweiten Satz von Anschlüssen; und
Auswählen der Anschlüsse, die gleichzeitig durch die Basisstation zu adressieren sind, basierend auf einem Vergleich des ersten Übertragungsparameters und des zweiten Übertragungsparameters.

13. Computerprogramm mit einem Programmcode zum Durchführen aller der Verfahrensschritte gemäß einem der Ansprüche 10 bis 12, wenn das Computerprogramm auf einem Computer oder einem Mikrokontroller läuft.

**Revendications**

1. Appareil (100) pour déterminer un paramètre de qualité de canal (112) pour un système de communication à entrées multiples et sorties multiples avec un certain nombre de flux de données fournis simultanément à des terminaux par une station de base, dans lequel le paramètre de qualité de canal (112) appartient à un canal entre l'un des terminaux, l'un des terminaux comprenant des antennes de réception, et la station de base, l'appareil comprenant:

un processeur (110) configuré pour déterminer le paramètre de qualité de canal (112) sur base du nombre des antennes de réception de l'un des terminaux,
dans lequel processeur (110) est configuré pour déterminer le paramètre de qualité de canal (112) sur base d'un premier indicateur de qualité de canal si le nombre de flux de données fournis simultanément par la station de base est égal ou inférieur au nombre d'antennes de réception de l'un des terminaux, et est configuré pour déterminer le paramètre de qualité de canal (112) sur base d'un deuxième indicateur de qualité de canal si le nombre de flux de données fournis simultanément par la station de base est supérieur au nombre d'antennes de réception de l'un des terminaux.

2. Appareil pour déterminer un paramètre de qualité de canal selon la revendication 1, dans lequel le processeur (110) est configuré pour déterminer le paramètre de qualité de canal (112) sur base d'une première quantité de rétroaction reçue d'un terminal.

3. Appareil pour déterminer un paramètre de qualité de canal selon la revendication 2, dans lequel le processeur (110) est configuré pour déterminer le premier indicateur de qualité de canal sur base de la première quantité de rétroaction et le deuxième indicateur de qualité de canal sur base d'une deuxième quantité de rétroaction reçue du terminal, où la première quantité de rétroaction est reçue aussi souvent que la deuxième quantité de rétroaction ou où la deuxième quantité de rétroaction est reçue plus souvent que la première quantité de rétroaction.

4. Appareil pour déterminer un paramètre de qualité de canal selon la revendication 3, dans lequel la première quantité de rétroaction ou la deuxième quantité de rétroaction est reçue pendant un intervalle de temps, dans lequel le terminal détermine pour un intervalle de temps la première quantité de rétroaction et la deuxième quantité de rétroaction, dans lequel la deuxième quantité de rétroaction est reçue pendant N intervalles de temps, suivie de la première quantité de rétroaction pendant un intervalle de temps, dans lequel la première quantité de rétroaction reçue est égale à une première quantité de rétroaction minimale des premières quantités de rétroaction déterminées pendant les intervalles de temps correspondant aux N intervalles de temps pendant lesquels est reçue la deuxième quantité de rétroaction et l'un intervalle de temps pendant lequel est reçue la première quantité de rétroaction.

5. Appareil pour déterminer un paramètre de qualité de canal selon la revendication 2, dans lequel le processeur (110) est configuré pour déterminer le premier indicateur de qualité de canal et le deuxième indicateur de qualité de canal sur base de la première quantité de rétroaction et d'un paramètre d'approximation.

6. Appareil (300) pour sélectionner les terminaux devant être adressés simultanément par une station de base d'un système de communication à entrées multiples et sorties multiples, dans lequel le système de communication à entrées multiples et sorties multiples comprend une pluralité de terminaux, l'appareil comprenant:

   un appareil (100) pour déterminer un paramètre de qualité de canal (112) selon l'une des revendications 1 à 5 déterminant les paramètres de qualité de canal pour la pluralité de terminaux; et un planificateur (310) configuré pour sélectionner les terminaux devant être adressés simultanément par la station de base sur base du paramètre de qualité de canal (112) de chaque terminal parmi les terminaux devant être adressés simultanément.

7. Appareil pour sélectionner les terminaux devant être adressés simultanément par la station de base selon la revendication 6, dans lequel le planificateur (310) est configuré pour sélectionner les terminaux sur base d'un paramètre de transmission.

8. Appareil pour sélectionner les terminaux devant être adressés simultanément par une station de base selon la revendication 7, dans lequel le planificateur (310) est configuré pour déterminer un premier paramètre de transmission pour un premier ensemble de terminaux sélectionnés, dans lequel un nombre de flux de données fournis simultanément au premier ensemble de terminaux sélectionnés est égal ou inférieur au nombre d'antennes de réception de l'un des terminaux du premier ensemble de terminaux sélectionnés, et est configuré pour déterminer un deuxième paramètre de transmission pour un deuxième ensemble de terminaux sélectionnés, dans lequel un nombre de flux de données fournis simultanément au deuxième ensemble de terminaux sélectionnés est supérieur au nombre d'antennes de réception de l'un des terminaux du deuxième ensemble de terminaux sélectionnés, et est configuré pour sélectionner les terminaux devant être adressés simultanément par la station de base sur base d'une comparaison du premier paramètre de transmission et du deuxième paramètre de transmission.

9. Appareil pour sélectionner les terminaux devant être adressés simultanément par une station de base selon l'une des revendications 6 à 8, dans lequel tous les terminaux adressés simultanément par la station de base comprennent le même nombre d'antennes de réception.

10. Procédé pour déterminer un paramètre de qualité de canal pour un système de communication à entrées multiples et sorties multiples avec un certain nombre de flux de données fournis simultanément aux terminaux par une station de base, dans lequel le paramètre de qualité de canal appartient à un canal entre l'un des terminaux, l'un des terminaux comprenant des antennes de réception, et la station de base, le procédé comprenant le fait de:

   déterminer le paramètre de qualité de canal sur base du nombre d'antennes de réception de l'un des terminaux en déterminant le paramètre de qualité de canal sur base d'un premier indicateur de qualité de canal si le nombre de flux de données fournis simultanément par la station de base est égal ou inférieur au nombre d'antennes de réception de l'un des terminaux et en déterminant le paramètre de qualité de canal sur base d'un deuxième indicateur de qualité de canal si le nombre de flux de données fournis simultanément par la station de base est supérieur au nombre d'antennes de réception de l'un des terminaux.

11. Procédé (900) pour sélectionner les terminaux devant être adressés simultanément par une station de base d'un système de communication à entrées multiples et sorties multiples, dans lequel le système de communication à entrées multiples et sorties multiples comprend une pluralité de terminaux, le procédé comprenant de fait de:

déterminer (910) les paramètres de qualité de canal pour la pluralité de terminaux selon le procédé de la revendication 10; et
sélectionner (920) les terminaux devant être adressés simultanément par la station de base sur base du paramètre de qualité de canal de chaque terminal parmi les terminaux devant être adressés simultanément.

12. Procédé pour sélectionner les terminaux devant être adressés simultanément par la station de base selon la revendication 11, dans lequel la sélection des terminaux devant être adressés simultanément par la station de base comprend le fait de:

sélectionner un premier ensemble de terminaux parmi la pluralité de terminaux, où un nombre de flux de données fournis simultanément au premier ensemble de terminaux est égal ou inférieur ou nombre d'antennes de réception de l'un des terminaux du premier ensemble de terminaux;
calculer un premier paramètre de transmission pour le premier ensemble de terminaux;
sélectionner un deuxième ensemble de terminaux parmi la pluralité de terminaux, où un nombre de flux de données fournis simultanément au deuxième ensemble de terminaux est supérieur au nombre d'antennes de réception de l'un des terminaux du deuxième ensemble de terminaux;
calculer un deuxième paramètre de transmission pour le deuxième ensemble de terminaux; et
sélectionner les terminaux devant être adressés simultanément par la station de base sur base d'une comparaison du premier paramètre de transmission et du deuxième paramètre de transmission.

13. Programme d'ordinateur avec un code de programme pour réaliser toutes les étapes de procédé selon l'une des revendications 10 à 12 lorsque le programme d'ordinateur est exécuté sur un ordinateur ou un microcontrôleur.

100

PROCESSOR ~110

~112

FIG 1

FIG 2

300

100

112

SCHEDULER 310

# FIG 3

EP 2 214 338 B1

400

430

$\gamma[i] = CQI_k^{\widehat{T1}}[i]$

420

$\gamma[i] = CQI_k^{T2}[i]$

410

t

$\tau_{fb}$

412

$C_1\tau_{fb}$

432

FIG 4

FIG 5

FIG 6

700

FIG 7

800

CHANNEL
QUALITY
DETERMINER — 810

— 812

PROCESSOR — 820

— 822

FIG 8

900

Determining channel quality parameters for the plurality of terminals based on a number of receive antennas of one of the terminals.  — 910

Selecting the terminals to be simultaneously addressed by the base station based on the channel quality parameter of each terminal of the terminals to be simultaneously addressed.  — 920

FIG 9

1000

Determining a channel quality of a channel between the terminal and a base station. ~1010

Determining a value of only one feedback quantity based on the determined channel quality and provide this feedback quantity as the channel quality information or determining values of two feedback quantities based on the determined channel quality and provide these two feedback quantities as the channel quality information, wherein the first feedback quantity is determined as often as the second feedback quantity or wherein the second feedback quantity is determined more often than the first feedback quantity. ~1020

FIG 10

FIG 11

FIG 12

FIG 13

FIG 14

EP 2 214 338 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0145300 A1
- US 20080227495 A1

- EP 1508992 A2

### Non-patent literature cited in the description

- **M. TRIVELLATO ; F. BOCCARDI ; F. TOSATO.** User selection schemes for MIMO broadcast channels with limited feedback. *Vehicular Technology Conference, 2007. VTC2007-Spring. IEEE 65th,* April 2007, 2089-2093
- **N. JINDAL.** A feedback reduction technique for MIMO broadcast channels. *Information Theory, 2006 IEEE International Symposium,* July 2006, 2699-2703
- User selection schemes for MIMO broadcast channels with limited feedback. **M. TRIVELLATO ; F. BOCCARDI ; F. TOSATO.** Vehicular Technology Conference. VTC2007-Spring, April 2007, 2089-2093
- **N. JINDAL.** A feedback reduction technique for MIMO broadcast channels. *In formation Theory, 2006 IEEE International Symposium,* July 2006, 2699-2703
- User selection schemes for MIMO broadcast channels with limited feedback. **M. TRIVELLATO ; F. BOCCARDI ; F. TOSATO.** Vehicular Technology Conference, 2007. VTC2007-Spring, April 2007, 2089-2093

- **U. MADHOW ; M.L. HONIG.** MMSE interference suppression for direct-sequence spreadspectrum CDMA. *Communications, IEEE Transactions,* December 1994, vol. 42 (12), 3178-3188
- **TRIVELLATO et al.** User selection schemes for MIMO broadcast channels with limited feedback. *Vehicular Technology Conference, 2007. VTC2007-Spring. IEEE 65th,* April 2007, 2089-2093
- User selection schemes for MIMO broadcast channels with limited feedback. **TRIVELLATO et al.** Vehicular Technology Conference, 2007. VTC2007-Spring, April 2007, 2089-2093
- User selection schemes or MIMO broadcast channels with limited feedback. **M. TRIVELLATO ; F. BOCCARDI ; F. TOSATO.** Vehicular Technology Conference, 2007. VTC2007-Spring, April 2007, 2089-2093